# EUROPÄISCHE PATENTANMELDUNG

(11) **EP 4 550 072 A1**
(43) Veröffentlichungstag der Anmeldung: **07.05.2025**
(21) Anmeldenummer: 24207425.0
(22) Anmeldetag: 18.10.2024
(51) Int. Cl.: G05B 23/02, G06F 11/34

(54) **VERFAHREN UND VORRICHTUNG ZUM VERARBEITEN VON MIT EINEM ERZEUGNIS ASSOZIIERTEN DATEN**

(30) Priorität: 02.11.2023 DE 102023130355
(71) Anmelder: Gemü Gebr. Müller Apparatebau GmbH & Co. Kommanditgesellschaft, 74653 Ingelfingen (DE)
(72) Erfinder: Höfs, Daniel, 74653 Künzelsau (DE)
(74) Vertreter: DREISS Patentanwälte PartG mbB

(57) **Zusammenfassung**

Verfahren, beispielsweise computerimplementiertes Verfahren, zum Verarbeiten von mit einem Erzeugnis assoziierten Daten, aufweisend: Ermitteln von ersten Daten wenigstens einer mit dem Erzeugnis assoziierten Datenquelle, Ermitteln, basierend auf den ersten Daten, zweiter Daten, die wenigstens einen statistischen Parameter der ersten Daten charakterisieren, beispielsweise repräsentieren, Prüfen, ob das Ermitteln der ersten Daten und/oder das Ermitteln der zweiten Daten für ein vorgebbares erstes Zeitintervall ausgeführt worden ist, und, wenn das Prüfen ergibt, dass das Ermitteln der ersten Daten und/oder das Ermitteln der zweiten Daten für das vorgebbare erste Zeitintervall ausgeführt worden ist, Speichern wenigstens der zweiten Daten.

## Beschreibung

Die Offenbarung betrifft ein Verfahren zum Verarbeiten von mit einem Erzeugnis assoziierten Daten.

Die Offenbarung betrifft ferner eine Vorrichtung zum Verarbeiten von mit einem Erzeugnis assoziierten Daten.

Beispielhafte Ausführungsformen beziehen sich auf ein Verfahren, beispielsweise ein computerimplementiertes Verfahren, zum Verarbeiten von mit einem Erzeugnis assoziierten Daten, aufweisend: Ermitteln von ersten Daten wenigstens einer mit dem Erzeugnis assoziierten Datenquelle, Ermitteln, basierend auf den ersten Daten, zweiter Daten, die wenigstens einen statistischen Parameter der ersten Daten charakterisieren, beispielsweise repräsentieren, Prüfen, ob das Ermitteln der ersten Daten und/oder das Ermitteln der zweiten Daten für ein vorgebbares erstes Zeitintervall ausgeführt worden ist, und, wenn das Prüfen ergibt, dass das Ermitteln der ersten Daten und/oder das Ermitteln der zweiten Daten für das vorgebbare erste Zeitintervall ausgeführt worden ist, Speichern wenigstens der zweiten Daten.

Bei weiteren beispielhaften Ausführungsformen kann alternativ oder ergänzend zu dem Prüfen, ob das Ermitteln der ersten Daten und/oder das Ermitteln der zweiten Daten für ein vorgebbares erstes Zeitintervall ausgeführt worden ist, und, wenn das Prüfen ergibt, dass das Ermitteln der ersten Daten und/oder das Ermitteln der zweiten Daten für das vorgebbare erste Zeitintervall ausgeführt worden ist, Speichern wenigstens der zweiten Daten, ein Prüfen ausgeführt werden, ob das Ermitteln der ersten Daten und/oder das Ermitteln der zweiten Daten für eine vorgebbare Menge bzw. Anzahl von jeweiligen Datenwerten z.B. der ersten Daten ausgeführt worden ist, und, wenn das Prüfen auf die Menge bzw. Anzahl ergibt, dass die vorgebbare Menge bzw. Anzahl erreicht worden ist, Speichern wenigstens der zweiten Daten.

Bei weiteren beispielhaften Ausführungsformen ist vorgesehen, dass das Erzeugnis zur Beeinflussung einer Fluidströmung ausgebildet ist. Beispielsweise ist das Erzeugnis ein Ventil bzw. ein Ventilblock. Die nachfolgende Beschreibung beispielhafter Ausführungsformen bezieht sich aus Gründen der Übersichtlichkeit überwiegend auf wenigstens ein als Ventil ausgebildetes Erzeugnis. Bei weiteren beispielhaften Ausführungsformen kann das Prinzip gemäß den Ausführungsformen jedoch ohne Beschränkung der Allgemeinheit auch auf andere Erzeugnisse als die beispielhaft genannten Ventile angewendet werden.

Bei weiteren beispielhaften Ausführungsformen ist vorgesehen, dass die wenigstens eine mit dem Erzeugnis assoziierte Datenquelle in das Erzeugnis integriert oder an dem Erzeugnis angeordnet, beispielsweise angebaut, ist.

Bei weiteren beispielhaften Ausführungsformen ist auch denkbar, dass die wenigstens eine mit dem Erzeugnis assoziierte Datenquelle entfernt von, also beispielsweise nicht direkt an, dem Erzeugnis angeordnet ist, aber beispielsweise in Datenverbindung mit dem Erzeugnis bzw. einer Vorrichtung des Erzeugnisses steht. Beispielsweise kann die Vorrichtung zur Ausführung von Aspekten gemäß den Ausführungsformen vorgesehen sein.

Bei weiteren beispielhaften Ausführungsformen ist die Vorrichtung in das Erzeugnis integriert oder an dem Erzeugnis angebaut.

Bei weiteren beispielhaften Ausführungsformen ist vorgesehen, dass die wenigstens eine mit dem Erzeugnis assoziierte Datenquelle ein Sensor ist, beispielsweise ein dem Erzeugnis zugeordneter, beispielsweise in das Erzeugnis integrierter (bzw. daran angebauter), Sensor. Beispielhaft können dem Erzeugnis bei weiteren Ausführungsformen eine Mehrzahl, z.B. Vielzahl (z.B. mehr als zehn), von Sensoren, beispielsweise unterschiedlichen Typs, zugeordnet sein.

Bei weiteren beispielhaften Ausführungsformen ist die Datenquelle als Sensor ausgebildet und z.B. dazu ausgebildet, Sensorwerte, beispielsweise in Form von einem oder mehreren skalaren Werten, bereitzustellen, beispielsweise wiederholt, beispielsweise periodisch. Beispielsweise charakterisieren die ersten Daten gemäß beispielhaften Ausführungsformen somit z.B. Sensordaten, die z.B. als Zeitreihe von Skalaren interpretierbar sind.

Bei weiteren beispielhaften Ausführungsformen sind ein oder mehrere der folgenden Größen wenigstens eines dem Erzeugnis zugeordneten Sensors erfassbar: a) Umgebungstemperatur, b) Temperatur eines Mediums, beispielsweise Fluids, dessen Fluidströmung durch das Erzeugnis, z.B. Ventil, beeinflussbar ist, c) Umgebungsfeuchte, d) Feuchte des Mediums, e) Vibration, z.B. charakterisierbar durch einen quadratischen Mittelwert, RMS, f) Beschleunigung, g) Orientierung im Raum, h) Ventilposition, i) elektrische Versorgungsspannung, z.B. für wenigstens eine elektrische bzw. elektronische Komponente, j) Luftdruck z.B. einer pneumatischen Versorgung, k) elektrische Stromaufnahme wenigstens einer elektrischen bzw. elektronischen Komponente (z.B. Vorrichtung zur Ausführung von Aspekten des Verfahrens gemäß den Ausführungsformen, Elektromotor eines Ventilantriebs), I) obere Endlage, m) untere Endlage, n) wenigstens ein Kennwert einer Ventilmembran, o) Kraft, beispielsweise Betätigungskraft.

Bei weiteren beispielhaften Ausführungsformen sind z.B. auch ein oder mehrere Betriebsparameter wenigstens einer Komponente des Erzeugnisses oder andere zu dem Erzeugnis gehörige Daten im Sinne der, z.B. als, erste Daten ermittelbar, z.B. ein Parameter eines, z.B. elektronischen, Reglers für das Erzeugnis, Kenngrößen einer Frequenzanalyse (z.B. unter Verwendung einer Fast Fourier Transform, FFT), usw.

Bei weiteren beispielhaften Ausführungsformen sind z.B. ein oder mehrere virtuelle Sensoren als Datenquelle verwendbar.

Bei weiteren beispielhaften Ausführungsformen sind Kombinationen von ein oder mehreren realen Sensoren und ein oder mehreren virtuellen Sensoren und/oder anderen Komponenten bzw. Quellen von Informationen als Datenquelle verwendbar.

Bei weiteren beispielhaften Ausführungsformen können von der Datenquelle gelieferte Rohwerte bzw. Rohdaten als erste Daten verwendet werden.

Bei weiteren beispielhaften Ausführungsformen können von der Datenquelle gelieferte Rohwerte bzw. Rohdaten verarbeitet, beispielsweise vorverarbeitet, werden (beispielsweise zur Entfernung von unerwünschten Peaks, z.B. Ausreißern), und die daraus erhaltenen verarbeiteten bzw. vorverarbeiteten Daten werden als erste Daten verwendet.

Bei weiteren beispielhaften Ausführungsformen ist vorgesehen, dass dann, wenn das Prüfen ergibt, dass das Ermitteln der ersten Daten und/oder das Ermitteln der zweiten Daten nicht für das vorgebbare erste Zeitintervall ausgeführt worden ist, das Verfahren aufweist: Fortführen des Ermittelns der ersten Daten und/oder des Ermittelns der zweiten Daten. Dadurch kann bei weiteren beispielhaften Ausführungsformen z.B. sichergestellt werden, dass ausreichend viele erste Daten ermittelt werden, z.B. um hinreichend aussagekräftige zweite Daten ermitteln zu können.

Bei weiteren beispielhaften Ausführungsformen ist vorgesehen, dass a) das Ermitteln der ersten Daten ein wiederholtes, beispielsweise periodisches, Ermitteln der ersten Daten mit einer vorgebbaren Rate, aufweist, und/oder dass b) das Ermitteln der zweiten Daten ein wiederholtes, beispielsweise periodisches, Ermitteln der zweiten Daten, beispielsweise mit der vorgebbaren Rate, aufweist.

Bei weiteren beispielhaften Ausführungsformen sind auch unterschiedliche Raten für das Ermitteln der ersten Daten und das Ermitteln der zweiten Daten denkbar.

Bei weiteren beispielhaften Ausführungsformen ist vorgesehen, dass das Speichern wenigstens der zweiten Daten ein Speichern wenigstens der zweiten Daten in einem, beispielsweise internen, beispielsweise nichtflüchtigen, Speicher des Erzeugnisses aufweist, und, optional, ein Speichern von mit den zweiten Daten assoziierten Zeitinformationen, wobei beispielsweise die mit den zweiten Daten assoziierten Zeitinformationen einen mit den zweiten Daten assoziierten Zeitbereich charakterisieren.

Bei weiteren beispielhaften Ausführungsformen ist vorgesehen, dass der wenigstens eine statistische Parameter wenigstens eines der folgenden Elemente aufweist: a) Minimum, b) Maximum, c) Mittelwert, d) wenigstens ein Perzentil, z.B. ein fünfzigstes Perzentil, z.B. Median. Bei weiteren beispielhaften Ausführungsformen sind auch ein oder mehrere weitere statistische Parameter wie z.B. eine Varianz oder Standardabweichung usw. verwendbar.

Bei weiteren beispielhaften Ausführungsformen ist vorgesehen, dass das Verfahren wenigstens eines der folgenden Elemente aufweist: a) Initialisieren wenigstens eines der folgenden Elemente: a1) erster Zähler, beispielsweise mit dem vorgebbaren ersten Zeitintervall assoziierter Zähler, a2) aktueller Minimalwert, a3) aktueller Maximalwert, a4) eine aktuelle erste mit einem bzw. dem Mittelwert assoziierte Größe, b) Erfassen eines aktuellen, mit den ersten Daten assoziierten Werts, c) Ausführen einer Filterung, beispielsweise Entprellung, d) Aktualisieren des ersten Zählers und/oder der aktuellen ersten Größe, e) Prüfen, ob der aktuelle Wert, beispielsweise ein mittels der Filterung erhaltener gefilterter Wert, kleiner als der aktuelle Minimalwert ist, und, falls ja, Aktualisieren des aktuellen Minimalwerts, f) Prüfen, ob der aktuelle Wert, beispielsweise ein mittels der Filterung erhaltener gefilterter Wert, größer als der aktuelle Maximalwert ist, und, falls ja, Aktualisieren des aktuellen Maximalwerts.

Bei weiteren beispielhaften Ausführungsformen ist vorgesehen, dass das Verfahren aufweist: Ermitteln der zweiten Daten (z.B. Minimum, Maximum, Mittelwert) für das vorgebbare erste Zeitintervall und Speichern der zweiten Daten für das vorgebbare erste Zeitintervall zusammen mit das erste Zeitintervall, beispielsweise einen Anfang und ein Ende des ersten Zeitintervalls, charakterisierenden Zeitinformation (z.B. Startzeitpunkt des ersten Zeitintervalls und Endzeitpunkt des ersten Zeitintervalls). Bei weiteren beispielhaften Ausführungsformen können die genannten Daten z.B. einen ersten Bericht repräsentieren bzw. als erster Bericht angesehen werden, der die genannten statistischen Parameter für den durch das erste Zeitintervall charakterisierten Zeitraum enthält.

Bei weiteren beispielhaften Ausführungsformen ist vorgesehen, dass das Verfahren aufweist: Ermitteln der zweiten Daten für ein vorgebbares zweites Zeitintervall, das z.B. (nicht notwendig direkt) auf das erste Zeitintervall folgt, und Speichern der zweiten Daten für das vorgebbare zweite Zeitintervall zusammen mit das zweite Zeitintervall, beispielsweise einen Anfang und ein Ende des zweiten Zeitintervalls, charakterisierenden Zeitinformation. Bei weiteren beispielhaften Ausführungsformen können die genannten Daten z.B. einen zweiten Bericht repräsentieren bzw. als zweiter Bericht angesehen werden, der die genannten statistischen Parameter für den durch das zweite Zeitintervall charakterisierten Zeitraum enthält.

Bei weiteren beispielhaften Ausführungsformen ist vorgesehen, dass das Verfahren aufweist: Bereitstellen einer ersten Datenstruktur aufweisend ein Informationselement für eine Anfangszeit bzw. Startzeitpunkt eines mit den zweiten Daten assoziierten Zeitbereichs, ein Informationselement für eine Endzeit bzw. Endzeitpunkt eines mit den zweiten Daten assoziierten Zeitbereichs, und wenigstens ein Informationselement für ein oder mehrere mit der ersten Datenquelle assoziierte statistische Parameter, und, optional, Verwenden der ersten Datenstruktur, beispielsweise zum Speichern der zweiten Daten.

Nachfolgend ist beispielhaft eine Organisation u.a. der vorstehend beschriebenen zweiten Daten in Tabellenform gemäß weiteren beispielhaften Ausführungsformen abgebildet. Die erste Spalte Sp1 enthält einen Startzeitpunkt SZ z.B. des ersten Zeitintervalls, die zweite Spalte Sp2 enthält einen Endzeitpunkt des ersten Zeitintervalls, die dritte Spalte Sp3 enthält einen Minimalwert MinW der ersten Daten DAT-1 einer ersten Datenquelle aus dem ersten Zeitintervall, die vierte Spalte Sp4 enthält einen Maximalwert MaxW der ersten Daten DAT-1 der ersten Datenquelle aus dem ersten Zeitintervall, die fünfte Spalte Sp5 enthält einen Mittelwert Avg der ersten Daten DAT-1 der ersten Datenquelle aus dem ersten Zeitintervall. Optional können weitere Spalten Sp6, Sp7, Sp8 vorgesehen sein, die z.B. entsprechende statistische Parameter einer zweiten Datenquelle für das erste Zeitintervall enthalten, sowie ggf. noch weitere Spalten, was durch die drei Punkte".. ." angedeutet ist.

| Sp1 | Sp2 | Sp3 | Sp4 | Sp5 | Sp6 | Sp7 | Sp8 | ... |
|---|---|---|---|---|---|---|---|---|
| SZ | EZ | MinW | MaxW | Avg | | | | |

Bei weiteren beispielhaften Ausführungsformen können die zweiten Daten der betreffenden Datenquellen z.B. auch für wenigstens ein weiteres Zeitintervall, z.B. das bereits erwähnte zweite Zeitintervall, in bzw. analog zu der vorstehend beispielhaft tabellarisch organisierten Form verarbeitet, beispielsweise gespeichert werden, beispielsweise unter Verwendung der vorstehend beispielhaft beschriebenen ersten Datenstruktur. Je nach Anzahl der Datenquellen können bei weiteren beispielhaften Ausführungsformen weitere Tabellenspalten bzw. Informationselemente für die erste Datenstruktur verwendet werden.

Bei weiteren beispielhaften Ausführungsformen ist vorgesehen, dass das Verfahren aufweist: Zusammenfassen zweiter Daten unterschiedlicher, beispielsweise zueinander benachbarter, Zeitbereiche bzw. Zeitintervalle, wobei beispielsweise zusammengefasste zweite Daten erhalten werden, und, optional, Speichern der zusammengefassten zweiten Daten.

Bei weiteren beispielhaften Ausführungsformen ist vorgesehen, dass das Zusammenfassen wenigstens eines der folgenden Elemente aufweist: a) Ermitteln eines Minimums für die zusammengefassten zweiten Daten als Minimum der unterschiedlichen Zeitbereiche, b) Ermitteln eines Maximums für die zusammengefassten zweiten Daten als Maximum der unterschiedlichen Zeitbereiche, c) Ermitteln eines Mittelwerts für die zusammengefassten zweiten Daten als gewichteter Mittelwert der jeweiligen Mittelwerte der unterschiedlichen Zeitbereiche, wobei beispielsweise als Gewichtungsfaktoren eine jeweilige Größe bzw. Dauer des jeweiligen Zeitbereichs verwendbar ist.

Bei weiteren beispielhaften Ausführungsformen, bei denen z.B. mehr als die vorstehend beispielhaft beschriebenen drei statistischen Parameter für die zweiten Daten verwendet werden (z.B. zusätzlich eine Varianz), kann das Zusammenfassen für diese weiteren statistischen Parameter in analoger Weise ausgeführt werden.

Bei weiteren beispielhaften Ausführungsformen können bei dem Zusammenfassen die zweiten Daten von zwei, beispielsweise zueinander benachbarten, Zeitintervallen zusammengefasst werden, z.B. in der vorstehend beschriebenen Weise.

Bei weiteren beispielhaften Ausführungsformen können bei dem Zusammenfassen die zweiten Daten von mehr als zwei, beispielsweise jeweils zueinander benachbarten, Zeitintervallen zusammengefasst werden, z.B. analog zu der vorstehend beschriebenen Weise.

Bei weiteren beispielhaften Ausführungsformen ist vorgesehen, dass das Verfahren aufweist: Speichern dritter Daten, die wenigstens ein mit dem Erzeugnis assoziiertes Ereignis charakterisieren, und, optional, Bereitstellen und/oder Verwenden einer zweiten Datenstruktur für das Speichern der dritten Daten, wobei die zweite Datenstruktur wenigstens aufweist: ein Informationselement für einen Zeitpunkt eines Auftretens des Ereignisses, ein Informationselement (z.B. charakterisierend eine Ganzzahlvariable) für eine das Ereignis charakterisierende Information.

Bei weiteren beispielhaften Ausführungsformen kann anstelle des Zeitpunkts für das Auftreten des Ereignisses auch ein Zeitbereich, z.B. charakterisierbar durch einen Anfangszeitpunkt und einen Endzeitpunkt, vorgesehen sein, um zeitliche Informationen zu dem Auftreten eines Ereignisses zu beschreiben. Bei weiteren beispielhaften Ausführungsformen kann dies z.B. ein nachfolgend näher beschriebenes Zusammenfassen der dritten Daten gemäß weiteren beispielhaften Ausführungsformen vereinfachen.

Bei weiteren beispielhaften Ausführungsformen kann ein mit dem Erzeugnis assoziiertes Ereignis z.B. wenigstens eines der folgenden Ereignisse sein: a) Fehler, z.B. einer Komponente des Erzeugnisses, b) Warnung, z.B. einer Komponente des Erzeugnisses, c) Information, z.B. einer Komponente des Erzeugnisses, d) Initialisierung ist erfolgt, e) Wartung ist erfolgt, e) Motoranlauf und/oder Bewegungsbeginn Richtung Offen, f) Motoranlauf und/oder Bewegungsbeginn Richtung Geschlossen, g) (z.B. untere) Endlage erreicht, z.B. Dichtvorgang, h) z.B. obere Endlage erreicht, i) vorgebbare Längeneinheit (z.B. 1 Millimeter oder Dezimeter) gefahren, j) vorgebbare Zeiteinheit gefahren, k) Antriebsaktivität, z.B. für vorgebbaren Zeitraum, I) Konfigurationsänderung erfolgt, m) Messgerät außerhalb eines Bereichs.

Bei weiteren beispielhaften Ausführungsformen ist vorgesehen, dass das Verfahren aufweist: Zusammenfassen dritter Daten unterschiedlicher, beispielsweise zueinander benachbarter, Zeitpunkte oder Zeitbereiche bzw. Zeitintervalle, wobei beispielsweise zusammengefasste dritte Daten erhalten werden, und, optional, Speichern der zusammengefassten dritten Daten.

Bei weiteren beispielhaften Ausführungsformen ist vorgesehen, dass das Zusammenfassen dritter Daten unterschiedlicher, beispielsweise zueinander benachbarter, Zeitpunkte und/oder Zeitbereiche bzw. Zeitintervalle aufweist: Zuordnen der dritten Daten der unterschiedlichen Zeitpunkte oder Zeitbereiche zu einem aggregierten Zeitbereich, wobei beispielsweise der aggregierte Zeitbereich die unterschiedlichen Zeitpunkte und/oder Zeitbereiche aufweist, und, optional, Aggregieren einer jeweiligen ein Ereignis charakterisierenden Information.

Bei weiteren beispielhaften Ausführungsformen kann das Aggregieren beispielsweise aufweisen: Vorsehen eines Zählers für jedes aufgetretene Ereignis, wobei der Zähler angibt, wie oft das jeweilige Ereignis innerhalb des aggregierten Zeitbereichs aufgetreten ist.

Bei weiteren beispielhaften Ausführungsformen kann das Zusammenfassen der zweiten Daten und/oder das Zusammenfassen der dritten Daten z.B. jeweils wiederholt ausgeführt werden, beispielsweise bis hierdurch erhaltbare zusammengefasste Daten ein Zielkriterium erfüllen, beispielsweise eine vorgebbare maximale Datenmenge unterschreiten.

Bei weiteren beispielhaften Ausführungsformen ist vorgesehen, dass das Verfahren aufweist: Ermitteln einer ersten Größe, die eine Datenmenge von in dem Speicher gespeicherten zweiten Daten und/oder dritten Daten charakterisiert, optional Vergleichen der ersten Größe mit einem vorgebbaren ersten Schwellwert, optional basierend auf dem Vergleichen, Zusammenfassen wenigstens eines der folgenden Elemente: a) in dem Speicher gespeicherter zweiter Daten, b) in dem Speicher gespeicherter dritter Daten. Dadurch kann bei weiteren beispielhaften Ausführungsformen vorteilhaft vermieden werden, dass, beispielsweise nach einer bestimmten Betriebsdauer, der Speicher nicht mehr genug freien Speicherplatz z.B. für die Speicherung zukünftig anfallender Daten aufweist. Bei weiteren beispielhaften Ausführungsformen können z.B. solche Daten, auf deren Basis das Zusammenfassen ausgeführt worden ist, wenigstens teilweise durch die zusammengefassten Daten überschrieben werden.

Bei weiteren beispielhaften Ausführungsformen kann vorgesehen sein, solche Daten, auf deren Basis ein Zusammenfassen ausgeführt worden ist, aus dem Speicher zu löschen.

Bei weiteren beispielhaften Ausführungsformen ist vorgesehen, dass das Zusammenfassen, beispielsweise ausschließlich, für zweite und/oder dritte Daten ausgeführt wird, die älter sind als ein vorgebbarer zweiter Schwellwert, wobei beispielsweise das Verfahren aufweist: Unterlassen eines Zusammenfassens von in dem Speicher gespeicherten zweiten und/oder dritten Daten, die jünger sind als der zweite Schwellwert. Dadurch kann bei weiteren beispielhaften Ausführungsformen sichergestellt werden, dass vergleichsweise junge Daten unverändert beibehalten werden, wenigstens für einen bestimmten Zeitraum, z.B. in Bezug auf den zweiten Schwellwert.

Bei weiteren beispielhaften Ausführungsformen ist vorgesehen, dass das Verfahren aufweist: Ermitteln, beispielsweise Vorgeben oder Empfangen, eines bzw. des zweiten Schwellwerts, wobei der zweite Schwellwert einen Zeitpunkt derart charakterisiert, dass in dem Speicher gespeicherte zweite und/oder dritte Daten, die jünger sind als der zweite Schwellwert, nicht zusammengefasst und/oder gelöscht werden dürfen, und, optional, Ermitteln, basierend auf dem zweiten Schwellwert, ob in dem Speicher gespeicherte zweite Daten und/oder dritte Daten zusammengefasst werden dürfen.

Bei weiteren beispielhaften Ausführungsformen ist vorgesehen, dass das Verfahren aufweist: Ermitteln einer zweiten Größe, die eine Datenmenge von in dem Speicher gespeicherten zweiten Daten und/oder dritten Daten charakterisiert, die jünger sind als der zweite Schwellwert, und, optional Verwenden der zweiten Größe, beispielsweise für eine Steuerung eines Betriebs wenigstens einer Komponente des Erzeugnisses.

Bei weiteren beispielhaften Ausführungsformen ist vorgesehen, dass das Verfahren aufweist: Vergleichen der zweiten Größe mit der ersten Größe, und, basierend auf dem Vergleichen, Ausführen wenigstens eines der folgenden Elemente: a) Verändern des zweiten Schwellwerts, und/oder b) Verändern des vorgebbaren ersten Zeitintervalls, c) Bereitstellen und/oder Verändern eines ersten Parameters für das Zusammenfassen.

Bei weiteren beispielhaften Ausführungsformen ist vorgesehen, dass das Vergleichen aufweist: Ermitteln eines Quotienten aus der zweiten Größe und der ersten Größe und Vergleichen, ob der Quotient größer ist als ein vorgebbarer dritter Schwellwert.

Bei weiteren beispielhaften Ausführungsformen kann z.B. dann, wenn der Quotient größer ist als der vorgebbare dritte Schwellwert, darauf geschlossen werden, dass ein Anteil vergleichsweise junger, z.B. nicht überschreibbarer bzw. nicht löschbarer, Daten vergleichsweise groß ist, Bezogen auf die Datenmenge der gesamten in dem Speicher gespeicherten zweiten Daten und/oder dritten Daten, und/oder, es kann dann z.B. der zweite Schwellwert verringert werden.

Bei weiteren beispielhaften Ausführungsformen kann z.B. das Zusammenfassen von in dem Speicher gespeicherten zweiten Daten und/oder von in dem Speicher gespeicherten dritten Daten ausgeführt werden basierend auf dem Quotienten.

Bei weiteren beispielhaften Ausführungsformen ist vorgesehen, dass das Verfahren aufweist: Bereitstellen von ersten Informationen zur Steuerung des Zusammenfassens, wobei die ersten Informationen beispielsweise eine Sollintervallgröße in Abhängigkeit wenigstens einer Betriebsdauer des Erzeugnisses beschreiben, wobei beispielsweise die ersten Informationen mittels einer Kennlinie charakterisierbar sind, und, optional Verwenden der ersten Informationen für das Zusammenfassen.

Bei weiteren beispielhaften Ausführungsformen charakterisiert die Sollintervallgröße z.B. eine, beispielsweise maximale, Zeitdauer, zu der ein Bericht bzw. den Bericht charakterisierende zusammengefasste Daten gebildet werden. Mit anderen Worten gibt die Sollintervallgröße z.B. die maximale Zeitdauer an, zu der zweite Daten wie z.B. ein Minimum und/oder Maximum und/oder Mittelwert gebildet werden, z.B. durch ein Zusammenfassen gemäß den Ausführungsformen, wodurch bei weiteren beispielhaften Ausführungsformen gleichsam eine zeitliche Auflösung der zweiten Daten steuerbar ist. Beispielsweise gibt eine Sollintervallgröße von 10 Sekunden an, dass - z.B. selbst nach einem Zusammenfassen von zweiten Daten - statistische Parameter wie z.B. Minimum und/oder Maximum und/oder Mittelwert maximal mit dem genannten Zeitraum von 10 Sekunden assoziiert sind, also die jeweiligen statistischen Eigenschaften der zugrundeliegenden ersten Daten aus dem Zeitraum der genannten 10 Sekunden repräsentieren.

Bei weiteren beispielhaften Ausführungsformen ist z.B. denkbar, vergleichsweise kleine Werte für die Sollintervallgröße für solche Daten zu wählen, die vergleichsweise jung sind, deren Ermittlung also z.B. vergleichsweise kurz zurückliegt. Bei weiteren beispielhaften Ausführungsformen ist z.B. denkbar, vergleichsweise große Werte für die Sollintervallgröße für solche Daten zu wählen, die vergleichsweise alt sind, deren Ermittlung also z.B. vergleichsweise lange zurückliegt.

Bei weiteren beispielhaften Ausführungsformen kann die Sollintervallgröße z.B. mittels der genannten Kennlinie vorgegeben werden, z.B. für verschiedene Betriebsdauern. Bei weiteren beispielhaften Ausführungsformen kann die Kennlinie z.B. Stufen bzw. Sprünge aufweisen.

Bei weiteren beispielhaften Ausführungsformen ist vorgesehen, dass das Verfahren wenigstens eines der folgenden Elemente aufweist: a) Speichern, beispielsweise zumindest zeitweises Speichern, wenigstens eines Teils der ersten Daten und/oder der zweiten Daten und/oder der dritten Daten in einem flüchtigen Speicher (der beispielsweise in dem Erzeugnis integriert sein kann), b) Senden wenigstens eines Teils der ersten Daten und/oder der zweiten Daten und/oder der dritten Daten an wenigstens eine weitere, beispielsweise externe, Einheit, beispielsweise ein mobiles oder stationäres Gerät zur Datenerfassung. Bei weiteren beispielhaften Ausführungsformen kann das Senden unter Verwendung einer drahtlosen Datenverbindung und/oder einer drahtgebundenen Datenverbindung ausgeführt werden.

Weitere beispielhafte Ausführungsformen beziehen sich auf eine Vorrichtung zur Ausführung des Verfahrens gemäß den Ausführungsformen. Beispielsweise kann die Vorrichtung bei weiteren beispielhaften Ausführungsformen in das Erzeugnis integriert, z.B. in ein Gehäuse des Erzeugnisses integriert, oder an das Erzeugnis angebaut sein.

Weitere beispielhafte Ausführungsformen beziehen sich auf ein Erzeugnis, beispielsweise ein Ventil oder Ventilblock, aufweisend wenigstens eine Vorrichtung gemäß den Ausführungsformen.

Weitere beispielhafte Ausführungsformen beziehen sich auf ein computerlesbares Speichermedium, aufweisend Befehle, die bei der Ausführung durch einen Computer diesen veranlassen, das Verfahren gemäß den Ausführungsformen auszuführen.

Weitere beispielhafte Ausführungsformen beziehen sich auf ein Computerprogramm, umfassend Befehle, die bei der Ausführung des Programms durch einen Computer diesen veranlassen, das Verfahren gemäß den Ausführungsformen auszuführen.

Weitere beispielhafte Ausführungsformen beziehen sich auf ein Datenträgersignal, das das Computerprogramm gemäß den Ausführungsformen überträgt und/oder charakterisiert.

Weitere beispielhafte Ausführungsformen beziehen sich auf eine Verwendung des Verfahrens gemäß den Ausführungsformen und/oder der Vorrichtung gemäß den Ausführungsformen und/oder des Erzeugnisses gemäß den Ausführungsformen und/oder des computerlesbaren Speichermediums gemäß den Ausführungsformen und/oder des Computerprogramms gemäß den Ausführungsformen und/oder des Datenträgersignals gemäß den Ausführungsformen für wenigstens eines der folgenden Elemente: a) Verarbeiten von Daten eines im Feld befindlichen Erzeugnisses, b) zumindest zeitweises lokales Speichern von Daten, beispielsweise statistische Parameter charakterisierenden Daten, in dem Erzeugnis, c) Komprimieren von Daten, d) Reduzieren von Daten, e) Steigern einer Effizienz bezüglich eines, beispielsweise längerfristigen, Aufbewahrens von Daten, beispielsweise der zweiten Daten bzw. von den zweiten Daten abgeleiteten Daten, f) Erstellen von Berichten bezüglich wenigstens der zweiten Daten, g) Anpassen, beispielsweise dynamisches (während eines Betriebs z.B. des Erzeugnisses bzw. einer Aspekte gemäß den Ausführungsformen ausführenden Vorrichtung) Anpassen, von eine Speicherung wenigstens der zweiten Daten beeinflussenden Größen, h) Vorgeben unterschiedlicher zeitlicher Granularitäten für das Speichern und/oder zusammenfassen von Daten, beispielsweise der zweiten und/oder der dritten Daten, i) Unterscheiden zwischen, beispielsweise momentan, nicht zusammenzufassenden bzw. nicht zu löschenden Daten und solchen Daten, die, beispielsweise momentan, zusammengefasst und/oder gelöscht werden können, j) Bereitstellen von freiem Speicherplatz, beispielsweise in dem, beispielsweise internen, beispielsweise nichtflüchtigen, Speicher des Erzeugnisses, k) Zusammenfassen von Daten zu einer vorgebbaren Größe, l) konditionales Behalten von Daten.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm gemäß beispielhaften Ausführungsformen,
- Fig. 2: schematisch ein vereinfachtes Blockdiagramm gemäß beispielhaften Ausführungsformen,
- Fig. 3: schematisch ein vereinfachtes Blockdiagramm gemäß beispielhaften Ausführungsformen,
- Fig. 4: schematisch ein vereinfachtes Flussdiagramm gemäß beispielhaften Ausführungsformen,
- Fig. 5: schematisch ein vereinfachtes Flussdiagramm gemäß beispielhaften Ausführungsformen,
- Fig. 6: schematisch ein vereinfachtes Flussdiagramm gemäß beispielhaften Ausführungsformen,
- Fig. 7: schematisch ein vereinfachtes Flussdiagramm gemäß beispielhaften Ausführungsformen,
- Fig. 8: schematisch eine Datenstruktur gemäß beispielhaften Ausführungsformen,
- Fig. 9: schematisch ein vereinfachtes Flussdiagramm gemäß beispielhaften Ausführungsformen,
- Fig. 10: schematisch ein vereinfachtes Zeitdiagramm gemäß beispielhaften Ausführungsformen,
- Fig. 11: schematisch ein vereinfachtes Flussdiagramm gemäß beispielhaften Ausführungsformen,
- Fig. 12: schematisch eine Datenstruktur gemäß beispielhaften Ausführungsformen,
- Fig. 13: schematisch ein vereinfachtes Flussdiagramm gemäß beispielhaften Ausführungsformen,
- Fig. 14: schematisch ein vereinfachtes Zeitdiagramm gemäß beispielhaften Ausführungsformen,
- Fig. 15: schematisch ein vereinfachtes Flussdiagramm gemäß beispielhaften Ausführungsformen,
- Fig. 16: schematisch ein vereinfachtes Flussdiagramm gemäß beispielhaften Ausführungsformen,
- Fig. 17: schematisch ein vereinfachtes Flussdiagramm gemäß beispielhaften Ausführungsformen,
- Fig. 18: schematisch ein vereinfachtes Flussdiagramm gemäß beispielhaften Ausführungsformen,
- Fig. 19: schematisch ein vereinfachtes Flussdiagramm gemäß beispielhaften Ausführungsformen,
- Fig. 20: schematisch ein vereinfachtes Flussdiagramm gemäß beispielhaften Ausführungsformen,
- Fig. 21: schematisch ein vereinfachtes Blockdiagramm gemäß beispielhaften Ausführungsformen,
- Fig. 22: schematisch ein vereinfachtes Zeitdiagramm gemäß beispielhaften Ausführungsformen,
- Fig. 23: schematisch ein vereinfachtes Blockdiagramm gemäß beispielhaften Ausführungsformen,
- Fig. 24: schematisch Aspekte von Verwendungen gemäß beispielhaften Ausführungsformen.

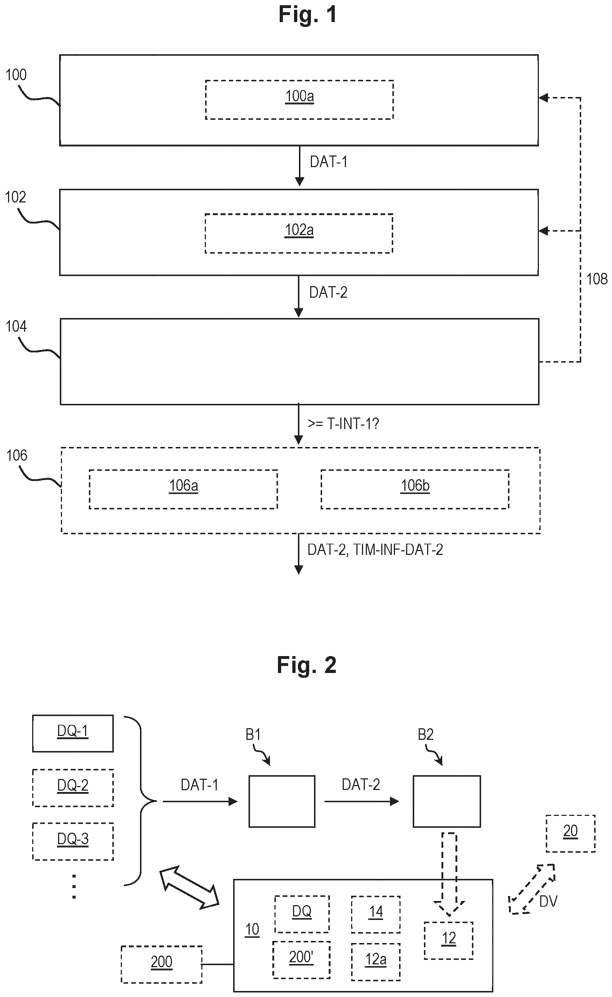

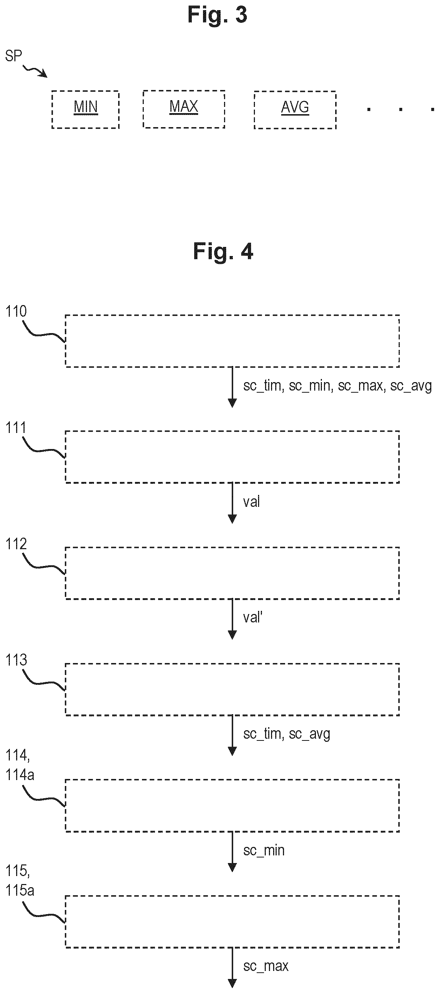

Beispielhafte Ausführungsformen, vgl. Fig. 1, 2, beziehen sich auf ein Verfahren, beispielsweise ein computerimplementiertes Verfahren, zum Verarbeiten von mit einem Erzeugnis 10 (Fig. 2) assoziierten Daten, aufweisend: Ermitteln 100 (Fig. 1) von ersten Daten DAT-1 wenigstens einer mit dem Erzeugnis 10 assoziierten Datenquelle DQ-1, Ermitteln 102, basierend auf den ersten Daten DAT-1, zweiter Daten DAT-2, die wenigstens einen statistischen Parameter SP (s. Fig. 3) der ersten Daten DAT-1 charakterisieren, beispielsweise repräsentieren, Prüfen 104, ob das Ermitteln 100 der ersten Daten DAT-1 und/oder das Ermitteln 102 der zweiten Daten DAT-2 für ein vorgebbares erstes Zeitintervall T-INT-1 ausgeführt worden ist, und, wenn das Prüfen 104 ergibt, dass das Ermitteln 100 der ersten Daten und/oder das Ermitteln 102 der zweiten Daten für das vorgebbare erste Zeitintervall T-INT-1 ausgeführt worden ist, Speichern 106 wenigstens der zweiten Daten DAT-2.

Bei weiteren beispielhaften Ausführungsformen, Fig. 2, ist vorgesehen, dass das Erzeugnis 10 zur Beeinflussung einer Fluidströmung ausgebildet ist. Beispielsweise ist das Erzeugnis 10 ein Ventil bzw. ein Ventilblock. Die nachfolgende Beschreibung beispielhafter Ausführungsformen bezieht sich aus Gründen der Übersichtlichkeit überwiegend auf wenigstens ein als Ventil ausgebildetes Erzeugnis 10. Bei weiteren beispielhaften Ausführungsformen kann das Prinzip gemäß den Ausführungsformen jedoch ohne Beschränkung der Allgemeinheit auch auf andere Erzeugnisse als die beispielhaft genannten Ventile angewendet werden.

Bei weiteren beispielhaften Ausführungsformen, Fig. 2, ist vorgesehen, dass die wenigstens eine mit dem Erzeugnis 10 assoziierte Datenquelle DQ-1 in das Erzeugnis integriert oder an dem Erzeugnis angeordnet, beispielsweise angebaut, ist, s. z.B. den Block DQ aus Fig. 2. Optional können auch weitere Datenquellen DQ-2, DQ-3, ... vorgesehen sein.

Bei weiteren beispielhaften Ausführungsformen ist auch denkbar, dass die wenigstens eine mit dem Erzeugnis 10 assoziierte Datenquelle DQ-1 entfernt von, also beispielsweise nicht direkt an, dem Erzeugnis 10 angeordnet ist, aber beispielsweise in Datenverbindung mit dem Erzeugnis 10 bzw. einer Vorrichtung 200 für das Erzeugnis 10 steht. Beispielsweise kann die Vorrichtung 200 zur Ausführung von Aspekten gemäß den Ausführungsformen vorgesehen sein, beispielsweise zur Ausführung von Aspekten des Ablaufs gemäß Fig. 1.

Bei weiteren beispielhaften Ausführungsformen, Fig. 2, ist die Vorrichtung in das Erzeugnis integriert, s. den Block 200', oder an dem Erzeugnis 10 angebaut, s. den Block 200.

Bei weiteren beispielhaften Ausführungsformen, Fig. 2, weist das Erzeugnis 10 wenigstens einen Speicher 12, 12a zur zumindest zeitweisen Speicherung z.B. der ersten Daten DAT-1 und/oder der zweiten Daten DAT-2 und/oder weiterer Daten auf.

Bei weiteren beispielhaften Ausführungsformen, Fig. 2, weist das Erzeugnis 10 weitere Komponenten auf, z.B. Komponenten eines Ventils, die aus Gründen der Übersichtlichkeit in Fig. 2 kollektiv mit dem Block 14 symbolisiert sind.

Bei weiteren beispielhaften Ausführungsformen, Fig. 2, ist vorgesehen, dass die wenigstens eine mit dem Erzeugnis 10 assoziierte Datenquelle DQ, DQ-1, DQ-2, DQ-3, ... ein Sensor ist, beispielsweise ein dem Erzeugnis 10 zugeordneter, beispielsweise in das Erzeugnis 10 integrierter (bzw. daran angebauter), Sensor. Beispielhaft können dem Erzeugnis 10 bei weiteren Ausführungsformen eine Mehrzahl, z.B. Vielzahl (z.B. mehr als zehn), von Sensoren, beispielsweise unterschiedlichen Typs, zugeordnet sein.

Bei weiteren beispielhaften Ausführungsformen ist die Datenquelle DQ, DQ-1, DQ-2, DQ-3, ... als Sensor ausgebildet und z.B. dazu ausgebildet, Sensorwerte, beispielsweise in Form von einem oder mehreren skalaren Werten, bereitzustellen, beispielsweise wiederholt, beispielsweise periodisch.

Beispielsweise charakterisieren die ersten Daten DAT-1 gemäß beispielhaften Ausführungsformen somit z.B. Sensordaten, die z.B. als Zeitreihe von Skalaren interpretierbar sind. Block B1 gemäß Fig. 2 symbolisiert beispielhaft das Ermitteln 100 gemäß Fig. 1, und Block B2 symbolisiert beispielhaft das Ermitteln 102 gemäß Fig. 1.

Bei weiteren beispielhaften Ausführungsformen sind ein oder mehrere der folgenden Größen wenigstens eines dem Erzeugnis 10 zugeordneten Sensors DQ-1, ... erfassbar, z.B. als erste Daten DAT-1: a) Umgebungstemperatur, b) Temperatur eines Mediums, beispielsweise Fluids, dessen Fluidströmung durch das Erzeugnis, z.B. Ventil, 10 beeinflussbar ist, c) Umgebungsfeuchte, d) Feuchte des Mediums, e) Vibration, z.B. charakterisierbar durch einen quadratischen Mittelwert, RMS, f) Beschleunigung, g) Orientierung im Raum, h) Ventilposition, i) elektrische Versorgungsspannung, z.B. für wenigstens eine elektrische bzw. elektronische Komponente, j) Luftdruck z.B. einer pneumatischen Versorgung, k) elektrische Stromaufnahme wenigstens einer elektrischen bzw. elektronischen Komponente (z.B. Vorrichtung zur Ausführung von Aspekten des Verfahrens gemäß den Ausführungsformen, Elektromotor eines Ventilantriebs), l) obere Endlage, m) untere Endlage, n) wenigstens ein Kennwert einer Ventilmembran, o) Kraft, beispielsweise Betätigungskraft.

Bei weiteren beispielhaften Ausführungsformen, Fig. 2, sind ein oder mehrere Betriebsparameter wenigstens einer Komponente 14 des Erzeugnisses 10 oder andere zu dem Erzeugnis 10 gehörige Daten im Sinne der ersten Daten DAT-1, z.B. als die ersten Daten DAT-1 bzw. als Teil der ersten Daten DAT-1, ermittelbar, z.B. ein Parameter eines, z.B. elektronischen, Reglers für das Erzeugnis 10, Kenngrößen einer Frequenzanalyse (z.B. unter Verwendung einer Fast Fourier Transform, FFT), usw. Mit anderen Worten handelt es sich bei manchen beispielhaften Ausführungsformen bei wenigstens einem Teil der ersten Daten DAT-1 nicht notwendig um mittels Sensoren messbare bzw. mittels Sensoren gemessene Informationen, sondern z.B. um interne Größen z.B. der Vorrichtung 200, 200' bzw. einer Komponente 14.

Bei weiteren beispielhaften Ausführungsformen, Fig. 1, ist vorgesehen, dass dann, wenn das Prüfen 104 ergibt, dass das Ermitteln 100 der ersten Daten DAT-1 und/oder das Ermitteln 102 der zweiten Daten DAT-2 nicht, z.B. nicht bereits, für das vorgebbare erste Zeitintervall T-INT-1 ausgeführt worden ist, das Verfahren aufweist: Fortführen 108 des Ermittelns 100 der ersten Daten DAT-1 und/oder des Ermittelns 102 der zweiten Daten DAT-2. Dadurch kann bei weiteren beispielhaften Ausführungsformen z.B. sichergestellt werden, dass ausreichend viele erste Daten DAT-1 ermittelt werden, z.B. um hinreichend aussagekräftige zweite Daten DAT-2 ermitteln zu können.

Bei weiteren beispielhaften Ausführungsformen, Fig. 1, ist vorgesehen, dass a) das Ermitteln 100 der ersten Daten DAT-1 ein wiederholtes, beispielsweise periodisches, Ermitteln 100a der ersten Daten DAT-1 mit einer vorgebbaren Rate, aufweist, und/oder dass b) das Ermitteln 102 der zweiten Daten DAT-2 ein wiederholtes, beispielsweise periodisches, Ermitteln 102a der zweiten Daten DAT-2, beispielsweise mit der vorgebbaren Rate, aufweist.

Bei weiteren beispielhaften Ausführungsformen sind auch unterschiedliche Raten für das Ermitteln 100, 100a der ersten Daten DAT-1 und das Ermitteln 102, 102a der zweiten Daten DAT-2 denkbar.

Bei weiteren beispielhaften Ausführungsformen, Fig. 2, ist vorgesehen, dass das Speichern 106 wenigstens der zweiten Daten DAT-2 ein Speichern 106a wenigstens der zweiten Daten DAT-2 in einem, beispielsweise internen, beispielsweise nichtflüchtigen, Speicher 12 des Erzeugnisses 10 aufweist, und, optional, ein Speichern 106b von mit den zweiten Daten DAT-2 assoziierten Zeitinformationen TIM-INF-DAT-2, wobei beispielsweise die mit den zweiten Daten DAT-2 assoziierten Zeitinformationen TIM-INF-DAT-2 einen mit den zweiten Daten DAT-2 assoziierten Zeitbereich charakterisieren, also z.B. einen Zeitbereich bzw. ein Zeitintervall, für das die zweiten Daten DAT-2 basierend auf den ersten Daten DAT-1 ermittelt worden sind.

Bei weiteren beispielhaften Ausführungsformen, Fig. 3, ist vorgesehen, dass der wenigstens eine statistische Parameter SP wenigstens eines der folgenden Elemente aufweist: a) Minimum MIN, b) Maximum MAX, c) Mittelwert AVG. Bei weiteren beispielhaften Ausführungsformen sind auch ein oder mehrere weitere statistische Parameter wie z.B. eine Varianz und/oder Standardabweichung und/oder wenigstens ein Perzentil, z.B. ein fünfzigstes Perzentil, z.B. Median, usw. (nicht gezeigt) verwendbar.

Bei weiteren beispielhaften Ausführungsformen, Fig. 4, ist vorgesehen, dass das Verfahren wenigstens eines der folgenden Elemente aufweist: a) Initialisieren 110 wenigstens eines der folgenden Elemente: a1) erster Zähler sc_tim, beispielsweise mit dem vorgebbaren ersten Zeitintervall T-INT-1 assoziierter Zähler, a2) aktueller Minimalwert sc_min, a3) aktueller Maximalwert sc_max, a4) eine aktuelle erste mit einem bzw. dem Mittelwert assoziierte Größe sc_avg, b) Erfassen 111 eines aktuellen, mit den ersten Daten DAT-1 assoziierten Werts val (z.B. Sensordatenwert der ersten Datenquelle DQ-1), c) Ausführen 112 einer Filterung, beispielsweise für eine Entprellung, wobei ein gefilterter Wert val' erhalten wird, d) Aktualisieren 113 des ersten Zählers sc_tim und/oder der aktuellen ersten Größe sc_avg, e) Prüfen 114, ob der aktuelle Wert val, beispielsweise der mittels der Filterung 112 erhaltene gefilterte Wert val', kleiner als der aktuelle Minimalwert sc_min ist, und, falls ja, Aktualisieren 114a des aktuellen Minimalwerts sc_min, f) Prüfen 115, ob der aktuelle Wert val, beispielsweise der mittels der Filterung 112 erhaltene gefilterte Wert val', größer als der aktuelle Maximalwert sc_max ist, und, falls ja, Aktualisieren 115a des aktuellen Maximalwerts sc_max.

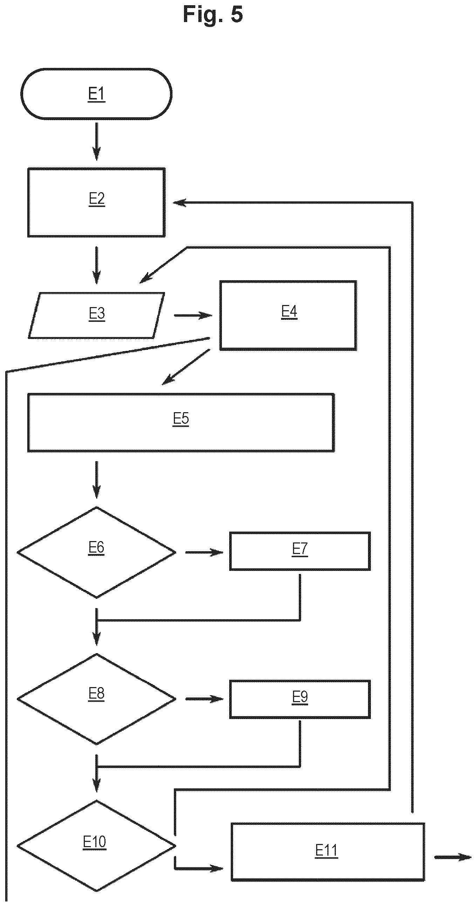

Das beispielhafte, vereinfachte Flussdiagramm aus Fig. 5 verdeutlicht weitere Aspekte des unter Bezugnahme auf Fig. 4 beschriebenen Ablaufs gemäß weiteren beispielhaften Ausführungsformen. Element E1 symbolisiert einen Start, Element E2 symbolisiert das Initialisieren 110 gemäß Fig. 4, Element E3 symbolisiert das Erfassen 111 des aktuellen Werts val, Element E4 symbolisiert die optionale Filterung 112, z.B. für eine Entprellung. Element E5 gemäß Fig. 5 symbolisiert das Aktualisieren 113 gemäß Fig. 4, die Elemente E6, E7, E8, E9 gemäß Fig. 5 korrespondieren mit den Blöcken 114, 114a, 115, 115a gemäß Fig. 4.

Beispielsweise kann das Initialisieren des ersten Zählers sc_tim ein zu Null setzen des ersten Zählers sc_tim aufweisen. Beispielsweise kann das Initialisieren des aktuellen Minimalwerts sc_min ein Setzen des aktuellen Minimalwerts auf einen Wert von "plus unendlich" bzw. einen entsprechenden Maximalwert eines für den aktuellen Minimalwert sc_min verwendeten Datentyps aufweisen. Beispielsweise kann das Initialisieren des aktuellen Maximalwerts sc_max ein Setzen des aktuellen Maximalwerts auf einen Wert von "minus unendlich" bzw. einen entsprechenden Minimalwert eines für den aktuellen Maximalwert sc_min verwendeten Datentyps aufweisen. Beispielsweise kann das Aktualisieren 113 des ersten Zählers sc_tim ein Inkrementieren, beispielsweise um ein Inkrement, das einem Reziprokwert einer vorgebbaren Erfassungs- bzw. Abtastrate entspricht, aufweisen. Beispielsweise kann das Aktualisieren 113 der aktuellen ersten mit dem Mittelwert assoziierte Größe sc_avg ein Inkrementieren der Größe sc_avg um den Wert val bzw. den gefilterten Wert val' aufweisen.

Bei weiteren beispielhaften Ausführungsformen, Fig. 5, kann z.B. dann auf das Verstreichen des vorgebbaren ersten Zeitintervalls T-INT-1 geschlossen werden, wenn der erste Zähler sc_tim einen dem vorgebbaren ersten Zeitintervalls T-INT-1 entsprechenden Schwellwert erreicht bzw. überschreitet, was z.B. in Block E10 gemäß Fig. 5 ermittelbar ist. In diesem Fall kann z.B. die aktuelle erste mit dem Mittelwert assoziierte Größe sc_avg dividiert werden durch ein Produkt aus dem Wert des ersten Zählers sc_tim mit dem Wert der Erfassungs- bzw. Abtastrate, was auf den zeitlichen Mittelwert des Werts val bzw. des gefilterten Werts val' für das vorgebbare erste Zeitintervall T-INT-1 führt, s. den Block E11. Somit veranschaulicht Fig. 5 beispielhaft eine Ermittlung der zweiten Daten DAT-2 im Sinne eines Minimums, eines Maximums, und eines Mittelwerts, für ein vorgegebenes Zeitintervall gemäß weiteren beispielhaften Ausführungsformen. Bei weiteren beispielhaften Ausführungsformen können die dabei ermittelten zweiten Daten DAT-2 wie vorstehend bereits unter Bezugnahme auf Fig. 1 beschrieben gespeichert werden.

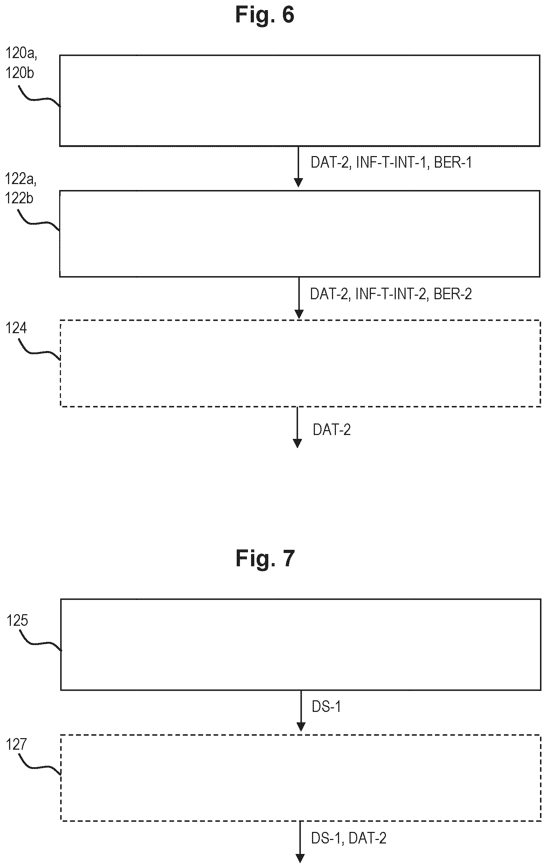

Bei weiteren beispielhaften Ausführungsformen, Fig. 6, ist vorgesehen, dass das Verfahren aufweist: Ermitteln 120a der zweiten Daten DAT-2 (z.B. aufweisend bzw. charakterisierend Minimum MIN, Maximum MAX, Mittelwert AVG) für das vorgebbare erste Zeitintervall T-INT-1 und Speichern 120b der zweiten Daten DAT-2 für das vorgebbare erste Zeitintervall T-INT-1 zusammen mit das erste Zeitintervall T-INT-1, beispielsweise einen Anfang und ein Ende des ersten Zeitintervalls, charakterisierenden Zeitinformation INF-T-INT-1 (z.B. Startzeitpunkt des ersten Zeitintervalls und Endzeitpunkt des ersten Zeitintervalls). Bei weiteren beispielhaften Ausführungsformen können die genannten Daten z.B. einen ersten Bericht BER-1 repräsentieren bzw. als erster Bericht BER-1 angesehen werden, der die genannten statistischen Parameter SP für den durch das erste Zeitintervall T-INT-1 charakterisierten Zeitraum enthält.

Bei weiteren beispielhaften Ausführungsformen, Fig. 6, ist vorgesehen, dass das Verfahren aufweist: Ermitteln 122a der zweiten Daten DAT-2 für ein vorgebbares zweites Zeitintervall, das z.B. (nicht notwendig direkt) auf das erste Zeitintervall T-INT-1 folgt, und Speichern 122b der zweiten Daten DAT-2 für das vorgebbare zweite Zeitintervall zusammen mit das zweite Zeitintervall, beispielsweise einen Anfang und ein Ende des zweiten Zeitintervalls, charakterisierenden Zeitinformation INF-T-INT-2. Bei weiteren beispielhaften Ausführungsformen können die genannten Daten z.B. einen zweiten Bericht BER-2 repräsentieren bzw. als zweiter Bericht BER-2 angesehen werden, der die genannten statistischen Parameter für den durch das zweite Zeitintervall charakterisierten Zeitraum enthält.

Der optionale Block 124 gemäß Fig. 6 symbolisiert ein optionales Speichern von zweiten DAT-2, die mit weiteren als den vorstehend genannten ersten und zweiten Zeitintervallen bzw. Zeitbereichen assoziiert sind, wobei das Speichern 124 z.B. wiederum in dem internen nichtflüchtigen Speicher 12a (Fig. 2) erfolgt.

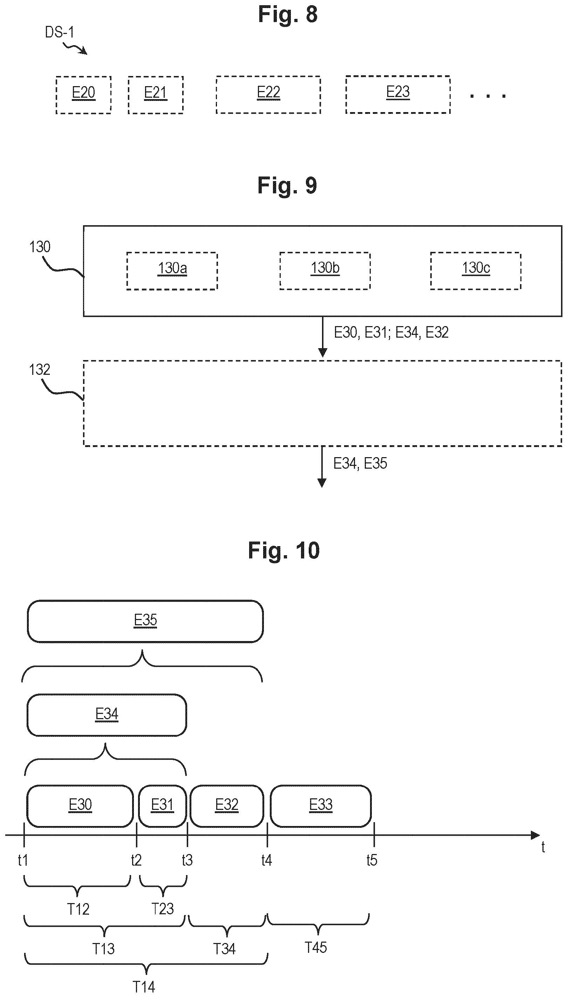

Bei weiteren beispielhaften Ausführungsformen, Fig. 7, 8, ist vorgesehen, dass das Verfahren aufweist: Bereitstellen 125 einer ersten Datenstruktur DS-1 aufweisend ein Informationselement E20 für eine Anfangszeit bzw. einen Startzeitpunkt eines mit den zweiten Daten DAT-2 assoziierten Zeitbereichs, ein Informationselement E21 für eine Endzeit bzw. einen Endzeitpunkt des mit den zweiten Daten DAT-2 assoziierten Zeitbereichs, und wenigstens ein Informationselement E22 für ein oder mehrere mit der ersten Datenquelle DQ-1 assoziierte statistische Parameter, und, optional, Verwenden 127 der ersten Datenstruktur DS-1, beispielsweise zum Speichern der zweiten Daten DAT-2. Optional kann die erste Datenstruktur DS-1, Fig. 8, auch weitere Informationselemente E23, ... aufweisen, z.B. für mit wenigstens einer weiteren Datenquelle DQ2, ... assoziierte statistische Parameter.

Nachfolgend ist beispielhaft eine Organisation u.a. der vorstehend beschriebenen zweiten Daten DAT-2 in Tabellenform gemäß weiteren beispielhaften Ausführungsformen abgebildet. Die erste Spalte Sp1 enthält einen Startzeitpunkt SZ z.B. des ersten Zeitintervalls, die zweite Spalte Sp2 enthält einen Endzeitpunkt EZ des ersten Zeitintervalls, die dritte Spalte Sp3 enthält einen Minimalwert MinW der ersten Daten DAT-1 einer ersten Datenquelle DQ-1 aus dem ersten Zeitintervall, die vierte Spalte Sp4 enthält einen Maximalwert MaxW der ersten Daten DAT-1 der ersten Datenquelle DQ-1 aus dem ersten Zeitintervall, die fünfte Spalte Sp5 enthält einen Mittelwert Avg der ersten Daten DAT-1 der ersten Datenquelle DQ-1 aus dem ersten Zeitintervall. Optional können weitere Spalten Sp6, Sp7, Sp8 vorgesehen sein, die z.B. entsprechende statistische Parameter z.B. wenigstens einer zweiten Datenquelle für das erste Zeitintervall enthalten, sowie ggf. noch weitere Spalten, was durch die drei Punkte "..." angedeutet ist.

| Sp1 | Sp2 | Sp3 | Sp4 | Sp5 | Sp6 | Sp7 | Sp8 | . . . |
|---|---|---|---|---|---|---|---|---|
| SZ | EZ | MinW | MaxW | Avg | | | | |

Bei weiteren beispielhaften Ausführungsformen können die zweiten Daten der betreffenden Datenquellen z.B. auch für wenigstens ein weiteres Zeitintervall, z.B. das bereits erwähnte zweite Zeitintervall, in bzw. analog zu der vorstehend beispielhaft tabellarisch organisierten Form verarbeitet, beispielsweise gespeichert, werden, beispielsweise unter Verwendung der vorstehend beispielhaft beschriebenen ersten Datenstruktur DS-1. Je nach Anzahl der Datenquellen können bei weiteren beispielhaften Ausführungsformen weitere Tabellenspalten bzw. Informationselemente für die erste Datenstruktur DS-1 verwendet werden.

Bei weiteren beispielhaften Ausführungsformen, Fig. 9, ist vorgesehen, dass das Verfahren aufweist: Zusammenfassen 130 zweiter Daten unterschiedlicher, beispielsweise zueinander benachbarter, Zeitbereiche bzw. Zeitintervalle, wobei beispielsweise zusammengefasste zweite Daten erhalten werden, und, optional, Speichern 132 der zusammengefassten zweiten Daten.

Fig. 10 zeigt hierzu schematisch ein Zeitdiagramm, in dem zweite Daten E30 für einen ersten Zeitbereich T12 zwischen dem Anfangszeitpunkt t1 und dem Endzeitpunkt t2 symbolisiert sind. Beispielsweise sind die zweiten Daten E30 für den ersten Zeitbereich T12 basierend auf einem Ablauf gemäß Fig. 4 und/oder Fig. 5 erhalten worden. In vergleichbarer Weise sind für weitere Zeitbereiche T23 (zwischen den Zeitpunkten t2, t3), T34 (zwischen den Zeitpunkten t3, t4), T45 (zwischen den Zeitpunkten t4, t5) weitere zweiten Daten E31, E32, E33 ermittelt worden. Es ist zu beachten, dass die unterschiedlichen Zeitbereiche T12, T23, T34, T45 bei weiteren beispielhaften Ausführungsformen beispielsweise jeweils unterschiedliche Längen bzw. Zeitdauern aufweisen können.

Bei weiteren beispielhaften Ausführungsformen können z.B. die zweiten Daten E30, E31 der Zeitbereiche T12, T23 zusammengefasst werden, wodurch zusammengefasste zweite Daten E34 für den Zeitbereich T13 erhalten werden.

Bei weiteren beispielhaften Ausführungsformen können z.B. die (bereits zusammengefassten) zweiten Daten E34 und die zweiten Daten E32 der Zeitbereiche T13, T34 zusammengefasst werden, wodurch (z.B. weiter) zusammengefasste zweite Daten E35 für den Zeitbereich T14 erhalten werden.

Beispielsweise charakterisieren die zweiten Daten E34 statistische Parameter wie z.B. Minimum MIN, Maximum MAX und Mittelwert AVG (Fig. 3) für den aggregierten Zeitbereich T13. Beispielsweise charakterisieren die zweiten Daten E35 statistische Parameter wie z.B. Minimum, Maximum und Mittelwert für den aggregierten Zeitbereich T14.

Bei weiteren beispielhaften Ausführungsformen ist z.B. auch ein wiederholtes Zusammenfassen von zuvor ggf. bereits zusammengefassten oder nicht bereits zusammengefassten zweiten Daten möglich, z.B. auch gemäß eines iterativen bzw. rekursiven Verfahrens.

Bei weiteren beispielhaften Ausführungsformen, Fig. 9, ist vorgesehen, dass das Zusammenfassen 130 wenigstens eines der folgenden Elemente aufweist: a) Ermitteln 130a eines Minimums für die zusammengefassten zweiten Daten E34 (Fig. 10) als Minimum der unterschiedlichen Zeitbereiche T12, T23 bzw. der Minima der zu den unterschiedlichen Zeitbereichen T12, T23 zugehörigen zweiten Daten E30, E31, b) Ermitteln 130b (Fig. 9) eines Maximums für die zusammengefassten zweiten Daten E34 als Maximum der unterschiedlichen Zeitbereiche T12, T23, bzw. der Maxima der zu den unterschiedlichen Zeitbereichen T12, T23 zugehörigen zweiten Daten E30, E31, c) Ermitteln 130c eines Mittelwerts für die zusammengefassten zweiten Daten E34 als gewichteter Mittelwert der jeweiligen Mittelwerte der unterschiedlichen Zeitbereiche T12, T23 bzw. der Mittelwerte der zu den unterschiedlichen Zeitbereichen T12, T23 zugehörigen zweiten Daten E30, E31, wobei beispielsweise als Gewichtungsfaktoren eine jeweilige Größe bzw. Dauer des jeweiligen Zeitbereichs T12, T23 verwendbar ist.

Bei weiteren beispielhaften Ausführungsformen, Fig. 10, können die zweiten Daten E30 für den Zeitbereich T12 beispielsweise als Bericht aufgefasst werden und/oder als B(T12) bezeichnet werden. In vergleichbarer Weise können die zweiten Daten E31 für den Zeitbereich T23 beispielsweise als Bericht aufgefasst werden und/oder als B(T23) bezeichnet werden.

Bei weiteren beispielhaften Ausführungsformen kann das Zusammenfassen 130 (Fig. 9) allgemein als Abbildung, beispielsweise Funktion, verstanden werden, z.B. gemäß B(T13)= /(B(T12), B(T23)), wobei zusammengefasste zweite Daten B(T13) für den Zeitbereich T13 beispielsweise basieren auf den zweiten Daten B(T12), B(T23) der für das Zusammenfassen 130 betrachteten Zeitbereiche T12, T23, beispielsweise gemäß den vorstehend beschriebenen Vorschriften 130a, 130b, 130c gemäß Fig. 9.

Bei weiteren beispielhaften Ausführungsformen, bei denen z.B. mehr als die vorstehend beispielhaft beschriebenen drei statistischen Parameter MIN, MAX, AVG (Fig. 3) für die zweiten Daten verwendet werden (z.B. zusätzlich eine Varianz), kann das Zusammenfassen für diese weiteren statistischen Parameter in analoger Weise ausgeführt werden.

Bei weiteren beispielhaften Ausführungsformen können z.B. auch weniger als die vorstehend beispielhaft beschriebenen drei statistischen Parameter MIN, MAX, AVG (Fig. 3) für die zweiten Daten verwendet werden, z.B. allein der Mittelwert AVG oder das Maximum MAX und der Mittelwert, usw. Auch bei diesen weiteren beispielhaften Ausführungsformen kann das Zusammenfassen für die betreffenden statistischen Parameter in analoger Weise ausgeführt werden.

Bei weiteren beispielhaften Ausführungsformen, Fig. 10, können bei dem Zusammenfassen die zweiten Daten E30, E31 von zwei, beispielsweise zueinander benachbarten, Zeitintervallen T12, T23 zusammengefasst werden, z.B. in der vorstehend beschriebenen Weise.

Bei weiteren beispielhaften Ausführungsformen, Fig. 10, können bei dem Zusammenfassen die zweiten Daten von mehr als zwei, beispielsweise jeweils zueinander benachbarten, Zeitintervallen zusammengefasst werden, z.B. analog zu der vorstehend beschriebenen Weise.

Beispielsweise können bei weiteren beispielhaften Ausführungsformen die zweiten Daten E30, E31, E32 zusammengefasst werden, was z.B. auf die zusammengefassten zweiten Daten E35 führt. Bei der Verwendung der statistischen Parameter MIN, MAX, AVG z.B. können die jeweilig resultierenden Werte für die zusammengefassten zweiten Daten E35 analog zu der vorstehend unter Bezugnahme auf das Zusammenfassen der zwei Elemente E30, E31 beschriebenen Vorgehensweise ermittelt werden. Beispielsweise ergibt sich das Minimum MIN für die basierend auf den drei Elementen E30, E31, E32 zusammengefassten zweiten Daten E35 als das Minimum der jeweiligen Minima der drei Elemente E30, E31, E32. Für das Maximum und den Mittelwert gelten die vorstehend beschriebenen Vorschriften für das Zusammenfassen 130 entsprechend.

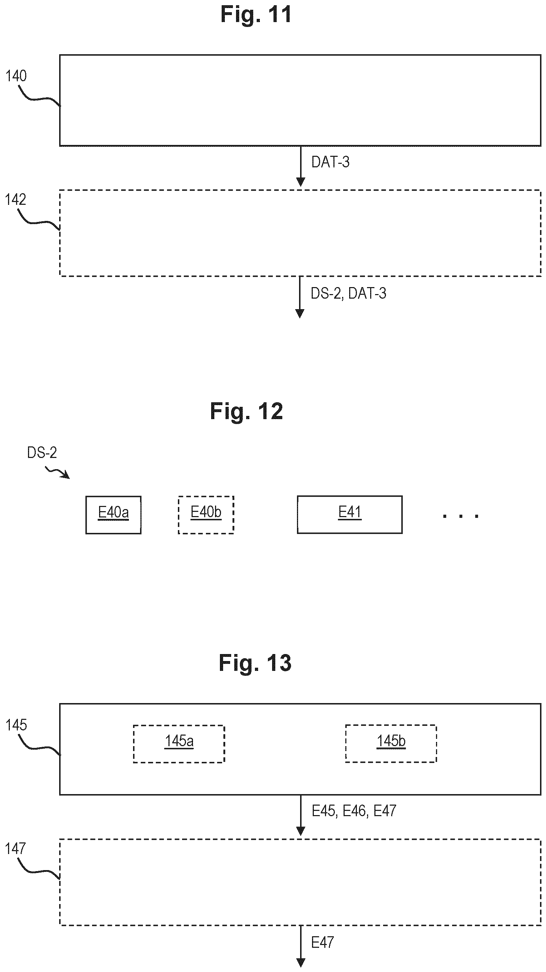

Bei weiteren beispielhaften Ausführungsformen, Fig. 11, ist vorgesehen, dass das Verfahren aufweist: Speichern 140 dritter Daten DAT-3, die wenigstens ein mit dem Erzeugnis 10 (Fig. 2) assoziiertes Ereignis charakterisieren, und, optional, Bereitstellen 142 und/oder Verwenden einer zweiten Datenstruktur DS-2 (Fig. 12) für das Speichern 140 der dritten Daten DAT-3, wobei die zweite Datenstruktur DS-2 wenigstens aufweist: ein Informationselement E40a für einen Zeitpunkt eines Auftretens des Ereignisses, ein Informationselement E41 (z.B. charakterisierend eine Ganzzahlvariable oder ein Bitfeld) für eine das Ereignis charakterisierende Information.

Bei weiteren beispielhaften Ausführungsformen kann das Speichern 140 der dritten DAT-3 zumindest zeitweise in dem Speicher 12 bzw. 12a erfolgen.

Bei weiteren beispielhaften Ausführungsformen, Fig. 12, kann anstelle des Zeitpunkts für das Auftreten des Ereignisses (s. das Informationselement E40a) auch ein Zeitbereich, z.B. charakterisierbar durch einen Anfangszeitpunkt (s. das Informationselement E40a) und einen Endzeitpunkt (s. das optionale Informationselement E40b), vorgesehen sein, um zeitliche Informationen zu dem Auftreten eines Ereignisses zu beschreiben. Bei weiteren beispielhaften Ausführungsformen kann dies z.B. ein nachfolgend näher beschriebenes Zusammenfassen der dritten Daten DAT-3 gemäß weiteren beispielhaften Ausführungsformen vereinfachen.

Bei weiteren beispielhaften Ausführungsformen kann ein mit dem Erzeugnis 10 assoziiertes Ereignis z.B. wenigstens eines der folgenden Ereignisse sein: a) Fehler, z.B. einer Komponente des Erzeugnisses, b) Warnung, z.B. einer Komponente des Erzeugnisses, c) Information, z.B. einer Komponente des Erzeugnisses, d) Initialisierung ist erfolgt, e) Wartung ist erfolgt, e) Motoranlauf und/oder Bewegungsbeginn Richtung Offen, f) Motoranlauf und/oder Bewegungsbeginn Richtung Geschlossen, g) (z.B. untere) Endlage erreicht, z.B. Dichtvorgang, h) z.B. obere Endlage erreicht, i) vorgebbare Längeneinheit (z.B. 1 Millimeter oder Dezimeter) gefahren, j) vorgebbare Zeiteinheit gefahren, k) Antriebsaktivität, z.B. für vorgebbaren Zeitraum, l) Konfigurationsänderung erfolgt, m) Messgerät außerhalb eines Bereichs.

Bei weiteren beispielhaften Ausführungsformen, Fig. 13, ist vorgesehen, dass das Verfahren aufweist: Zusammenfassen 145 dritter Daten unterschiedlicher, beispielsweise zueinander benachbarter, Zeitpunkte oder Zeitbereiche bzw. Zeitintervalle, wobei beispielsweise zusammengefasste dritte Daten erhalten werden, und, optional, Speichern 147 der zusammengefassten dritten Daten.

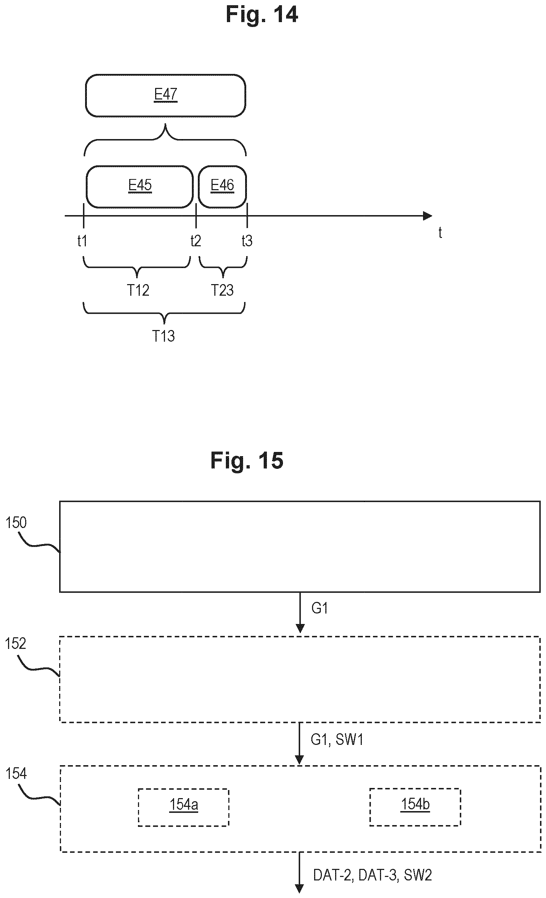

Fig. 14 zeigt hierzu ein Zeitdiagramm, bei dem Element E45 dritte Daten für einen Zeitbereich T12 symbolisiert, bei dem Element E46 dritte Daten für einen Zeitbereich T23 symbolisiert, und bei dem Element E47 die zusammengefassten dritten Daten symbolisiert, die z.B. Ereignisse für den aggregierten Zeitbereich T13 charakterisieren. Es ist zu beachten, dass die Zeitpunkte t1, t2, t3 gemäß Fig. 14 beispielhaft gewählt sind und bei manchen beispielhaften Ausführungsformen z.B. nicht den Zeitpunkten t1, t2, t3 gemäß Fig. 10 entsprechen. Bei anderen beispielhaften Ausführungsformen können jedoch die Zeitpunkte t1, t2, t3 gemäß Fig. 14 z.B. den Zeitpunkten t1, t2, t3 gemäß Fig. 10 entsprechen.

Bei weiteren beispielhaften Ausführungsformen, Fig. 13, ist vorgesehen, dass das Zusammenfassen 145 dritter Daten unterschiedlicher, beispielsweise zueinander benachbarter, Zeitpunkte und/oder Zeitbereiche bzw. Zeitintervalle aufweist: Zuordnen 145a der dritten Daten E45, E46 der unterschiedlichen Zeitpunkte oder Zeitbereiche T12, T23 zu einem aggregierten Zeitbereich T13, wobei beispielsweise der aggregierte Zeitbereich T13 die unterschiedlichen Zeitpunkte und/oder Zeitbereiche T12, T23 aufweist, beispielsweise einer Kombination der unterschiedlichen Zeitbereiche T12, T23 entspricht, und, optional, Aggregieren 145b einer jeweiligen ein Ereignis charakterisierenden Information.

Bei weiteren beispielhaften Ausführungsformen kann das Aggregieren 145b beispielsweise aufweisen: Vorsehen eines Zählers für jedes aufgetretene Ereignis, wobei der Zähler angibt, wie oft das jeweilige Ereignis innerhalb des aggregierten Zeitbereichs T13 aufgetreten ist.

Bei weiteren beispielhaften Ausführungsformen kann das Zusammenfassen 130 (Fig. 9) der zweiten Daten DAT-2 und/oder das Zusammenfassen 145 (Fig. 13) der dritten Daten DAT-3 z.B. jeweils wiederholt ausgeführt werden, beispielsweise bis hierdurch erhaltbare zusammengefasste (zweite bzw. dritte) Daten ein Zielkriterium erfüllen, beispielsweise eine vorgebbare maximale Datenmenge unterschreiten.

Bei weiteren beispielhaften Ausführungsformen kann das Zusammenfassen auch selektiv, beispielsweise nur für wenigstens manche der zweiten Daten DAT-2 ausgeführt werden, nicht jedoch z.B. für die dritten Daten DAT-3. Bei weiteren beispielhaften Ausführungsformen kann das Zusammenfassen auch selektiv, beispielsweise nur für wenigstens manche der dritten Daten DAT-3 ausgeführt werden, nicht jedoch z.B. für die zweiten Daten DAT-2.

Auf diese Weise können die betreffenden zweiten bzw. dritten Daten bei weiteren beispielhaften Ausführungsformen reduziert werden, z.B. so, dass sie weniger Speicherplatz z.B. in dem Speicher 12 benötigen, ohne dass, z.B. für viele Anwendungszwecke - zu viele Informationen der jeweiligen Daten verloren gehen.

Beispielsweise reduzieren sich bei einem Zusammenfassen 130 zweiter Daten gemäß beispielhaften Ausführungsformen Informationen über ein zeitliches Auftreten z.B. eines Maximums MAX zu einem gewissen Grad, der z.B. mit einer Zeitdauer eines Zeitbereichs der zusammengefassten zweiten Daten korreliert, was bei weiteren beispielhaften Ausführungsformen jedoch für viele z.B. bedeutsame Anwendungsfälle akzeptabel ist, angesichts einer möglichen Ersparnis von Speicherplatz, die sich dadurch ergibt.

Beispielsweise kann ein Zusammenfassen von zweiten Daten für zehn Zeitbereiche den Speicheraufwand für das Speichern zugehöriger statistischer Parameter wie z.B. MIN, MAX, AVG auf ein Zehntel reduzieren, wobei die zeitliche Auflösung z.B. zur Feststellung, wann das Maximum vorlag - ausgehend beispielhaft von einer gleichen Länge der zehn Zeitbereiche - auf ein Zehntel reduziert wird, was bei weiteren beispielhaften Ausführungsformen, beispielsweise bei vergleichsweise alten Daten, akzeptabel ist bzw. für viele bedeutsame Anwendungsfälle keine Einschränkung bedeutet. Vergleichbare Ausführungen gelten bei weiteren beispielhaften Ausführungsformen für ein mögliches Zusammenfassen wenigstens mancher Teile der dritten Daten DAT-3.

Bei weiteren beispielhaften Ausführungsformen, Fig. 15, ist vorgesehen, dass das Verfahren aufweist: Ermitteln 150 einer ersten Größe G1, die eine Datenmenge von in dem Speicher 12 (Fig. 2) gespeicherten zweiten Daten DAT-2 und/oder dritten Daten DAT-3 charakterisiert, optional Vergleichen 152 der ersten Größe G1 mit einem vorgebbaren ersten Schwellwert SW1, optional basierend auf dem Vergleichen 152, Zusammenfassen 154 wenigstens eines der folgenden Elemente: a) in dem Speicher 12 gespeicherter zweiter Daten DAT-2, b) in dem Speicher 12 gespeicherter dritter Daten DAT-3.

Dadurch kann bei weiteren beispielhaften Ausführungsformen vorteilhaft vermieden werden, dass, beispielsweise nach einer bestimmten Betriebsdauer, der Speicher 12 (Fig. 2) nicht mehr genug freien Speicherplatz z.B. für die Speicherung zukünftig anfallender Daten aufweist. Bei weiteren beispielhaften Ausführungsformen können z.B. solche Daten, auf deren Basis das Zusammenfassen 130, 145, 154 ausgeführt worden ist, wenigstens teilweise durch die zusammengefassten Daten überschrieben werden.

Bei weiteren beispielhaften Ausführungsformen kann vorgesehen sein, solche Daten, auf deren Basis ein Zusammenfassen 130, 145, 154 ausgeführt worden ist, aus dem Speicher 12 zu löschen.

Bei weiteren beispielhaften Ausführungsformen, Fig. 15, ist vorgesehen, dass das Zusammenfassen 154, beispielsweise ausschließlich, für zweite und/oder dritte Daten ausgeführt wird, s. Block 154a, die älter sind als ein vorgebbarer zweiter Schwellwert SW2, wobei beispielsweise das Verfahren aufweist: Unterlassen 154b eines Zusammenfassens von in dem Speicher 12 gespeicherten zweiten und/oder dritten Daten, die jünger sind als der zweite Schwellwert SW2. Dadurch kann bei weiteren beispielhaften Ausführungsformen sichergestellt werden, dass vergleichsweise junge Daten unverändert beibehalten werden, wenigstens für einen bestimmten Zeitraum, z.B. in Bezug auf den zweiten Schwellwert, was z.B. eine Beibehaltung der maximalen zeitlichen Auflösung ermöglicht.

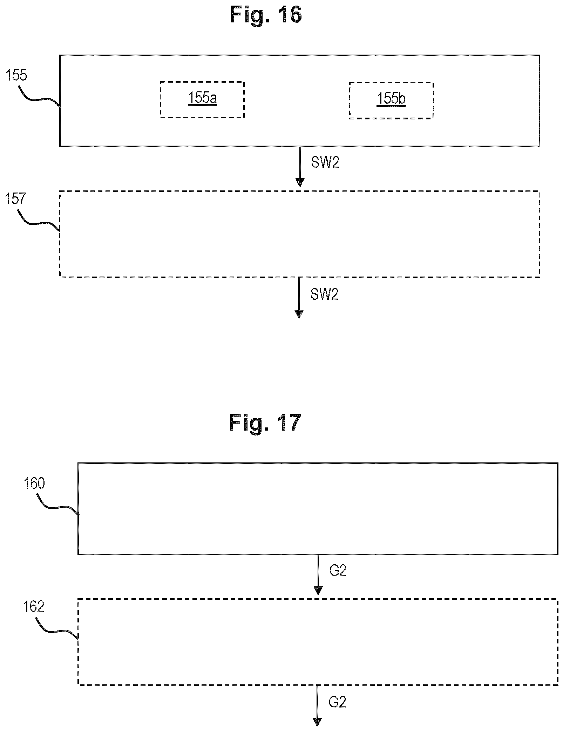

Bei weiteren beispielhaften Ausführungsformen, Fig. 16, ist vorgesehen, dass das Verfahren aufweist: Ermitteln 155, beispielsweise Vorgeben 155a (z.B. lokal in dem Erzeugnis 10, beispielsweise durch die Vorrichtung 200, 200') oder Empfangen 155b (beispielsweise von einer weiteren Einheit 20), eines bzw. des zweiten Schwellwerts SW2, wobei der zweite Schwellwert SW2 einen Zeitpunkt derart charakterisiert, dass in dem Speicher 12 (Fig. 2) gespeicherte zweite und/oder dritte Daten, die jünger sind als der zweite Schwellwert SW2, nicht zusammengefasst und/oder gelöscht werden dürfen, und, optional, Ermitteln 157 (Fig. 16), basierend auf dem zweiten Schwellwert SW2, ob in dem Speicher 12 gespeicherte zweite Daten und/oder dritte Daten zusammengefasst werden dürfen.

Bei weiteren beispielhaften Ausführungsformen, Fig. 17, ist vorgesehen, dass das Verfahren aufweist: Ermitteln 160 einer zweiten Größe G2, die eine Datenmenge von in dem Speicher 12 gespeicherten zweiten Daten und/oder dritten Daten charakterisiert, die jünger sind als der zweite Schwellwert SW2, und, optional Verwenden 162 der zweiten Größe G2, beispielsweise für eine Steuerung eines Betriebs wenigstens einer Komponente des Erzeugnisses 10, beispielsweise für ein zukünftiges Zusammenfassen 130, 145.

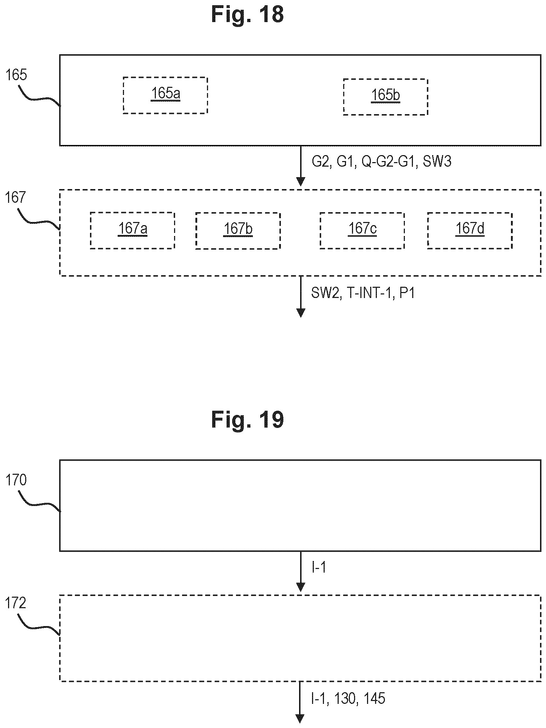

Bei weiteren beispielhaften Ausführungsformen, Fig. 18, ist vorgesehen, dass das Verfahren aufweist: Vergleichen 165 der zweiten Größe G2 mit der ersten Größe G1, und, basierend auf dem Vergleichen 165, Ausführen 167 wenigstens eines der folgenden Elemente: a) Verändern 167a des zweiten Schwellwerts SW2, und/oder b) Verändern 167b des vorgebbaren ersten Zeitintervalls T-INT-1, c) Bereitstellen 167c und/oder Verändern 167d eines ersten Parameters P1 für das Zusammenfassen. Beispielsweise kann der erste Parameter P1 für das Zusammenfassen vorgeben, a) bis zu welchem Grad das Zusammenfassen ausgeführt wird, und/oder b) wann das Zusammenfassen ausgeführt wird, und/oder b) welche statistischen Parameter SP für das Zusammenfassen berücksichtigt werden (z.B. alle der gespeicherten Parameter wie z.B. MIN, MAX, AVG, oder z.B. nur manche davon).

Bei weiteren beispielhaften Ausführungsformen, Fig. 18, ist vorgesehen, dass das Vergleichen 165 aufweist: Ermitteln 165a eines Quotienten Q-G2-G1 aus der zweiten Größe G2 und der ersten Größe G1 und Vergleichen 165b, ob der Quotient Q-G2-G1 größer ist als ein vorgebbarer dritter Schwellwert SW3.

Bei weiteren beispielhaften Ausführungsformen kann z.B. dann, wenn der Quotient Q-G2-G1 größer ist als der vorgebbare dritte Schwellwert SW3, darauf geschlossen werden, dass ein Anteil vergleichsweise junger, z.B. nicht überschreibbarer bzw. nicht löschbarer, Daten DAT-2, DAT-3 vergleichsweise groß ist, Bezogen auf die Datenmenge der gesamten in dem Speicher 12 gespeicherten zweiten Daten DAT-2 und/oder dritten Daten DAT-3, und/oder, es kann dann z.B. der zweite Schwellwert SW2 verringert werden.

Bei weiteren beispielhaften Ausführungsformen kann z.B. das Zusammenfassen 130, 145 von in dem Speicher 12 gespeicherten zweiten Daten DAT-2 und/oder von in dem Speicher 12 gespeicherten dritten Daten DAT-3 ausgeführt werden basierend auf dem Quotienten Q-G2-G1.

Bei weiteren beispielhaften Ausführungsformen kann z.B. eine zu dem Quotienten Q-G2-G1 vergleichbare Größe selektiv ermittelt werden z.B. nur für die zweiten Daten DAT-2 oder nur für die dritten Daten DAT-3. Vergleichbares gilt bei weiteren beispielhaften Ausführungsformen auch für basierend auf dem Quotienten ableitbare Maßnahmen, z.B. für ein Anpassen eines Zusammenfassens z.B. der zweiten Daten bzw. der dritten Daten.

Bei weiteren beispielhaften Ausführungsformen kann das Verändern 167b des vorgebbaren ersten Zeitintervalls T-INT-1 z.B. nach Vorgabe bzw. Konfiguration erfolgen, z.B. auch dynamisch (während eines Betriebs z.B. des Erzeugnisses 10 bzw. einer Aspekte gemäß den Ausführungsformen ausführenden Vorrichtung 200, 200'), z.B. ereignisbasiert, was, bei weiteren beispielhaften Ausführungsformen, z.B. auf unterschiedlich lange Zeitbereiche T12, T23, T34, T45 (Fig. 10) führen kann.

Beispielsweise kann bei weiteren beispielhaften Ausführungsformen vorgesehen sein, dass das vorgebbare erste Zeitintervall T-INT-1 verringert wird, wenn ein vorgebbarer Fehler aufgetreten ist, so dass fortan z.B. die zweiten Daten DAT-2 mit einer größeren zeitlichen Auflösung ermittelt werden.

Beispielsweise kann bei weiteren beispielhaften Ausführungsformen vorgesehen sein, dass das vorgebbare erste Zeitintervall T-INT-1 vergrößert wird, z.B. wenn für eine bestimmte Betriebsdauer kein Fehler aufgetreten ist, so dass fortan z.B. die zweiten Daten DAT-2 mit einer größeren zeitlichen Auflösung ermittelt werden.

Bei weiteren beispielhaften Ausführungsformen, Fig. 19, ist vorgesehen, dass das Verfahren aufweist: Bereitstellen 170 von ersten Informationen I-1 zur Steuerung des Zusammenfassens 130, 145, wobei die ersten Informationen I-1 beispielsweise eine Sollintervallgröße in Abhängigkeit wenigstens einer Betriebsdauer des Erzeugnisses 10 beschreiben, wobei beispielsweise die ersten Informationen I-1 mittels einer Kennlinie charakterisierbar sind, und, optional Verwenden 172 der ersten Informationen I-1 für das Zusammenfassen 130, 145.

Bei weiteren beispielhaften Ausführungsformen charakterisiert die Sollintervallgröße z.B. eine, beispielsweise maximale, Zeitdauer, zu der ein Bericht bzw. den Bericht charakterisierende zusammengefasste Daten AT-2, DAT-3 gebildet werden. Mit anderen Worten gibt die Sollintervallgröße z.B. die maximale Zeitdauer an, zu der zweite Daten wie z.B. ein Minimum und/oder Maximum und/oder Mittelwert gebildet werden, z.B. durch ein Zusammenfassen 130 gemäß den Ausführungsformen, wodurch bei weiteren beispielhaften Ausführungsformen gleichsam eine zeitliche Auflösung der (z.B. zusammengefassten) zweiten Daten DAT-2 steuerbar ist. Beispielsweise gibt eine Sollintervallgröße von 10 Sekunden an, dass - z.B. selbst nach einem Zusammenfassen von zweiten Daten - statistische Parameter wie z.B. Minimum und/oder Maximum und/oder Mittelwert maximal mit dem genannten Zeitraum von 10 Sekunden assoziiert sind, also die jeweiligen statistischen Eigenschaften der zugrundeliegenden ersten Daten aus dem Zeitraum der genannten 10 Sekunden repräsentieren.

Bei weiteren beispielhaften Ausführungsformen ist z.B. denkbar, vergleichsweise kleine Werte für die Sollintervallgröße für solche Daten zu wählen, die vergleichsweise jung sind, deren Ermittlung also z.B. vergleichsweise kurz zurückliegt. Bei weiteren beispielhaften Ausführungsformen ist z.B. denkbar, vergleichsweise große Werte für die Sollintervallgröße für solche Daten zu wählen, die vergleichsweise alt sind, deren Ermittlung also z.B. vergleichsweise lange zurückliegt.

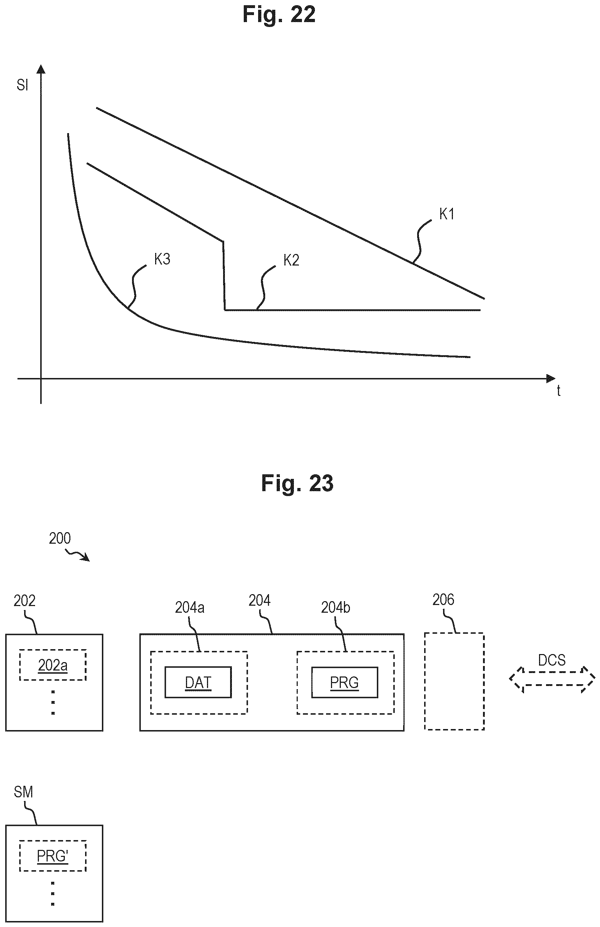

Bei weiteren beispielhaften Ausführungsformen kann die Sollintervallgröße z.B. mittels der genannten Kennlinie vorgegeben werden, z.B. für verschiedene Betriebsdauern. Bei weiteren beispielhaften Ausführungsformen kann die Kennlinie z.B. Stufen bzw. Sprünge aufweisen. Fig. 22 zeigt hierzu beispielhaft mögliche Kennlinien K1, K2, K3 gemäß weiteren beispielhaften Ausführungsformen, die jeweils eine Sollintervallgröße SI über einer Zeit - z.B. entsprechend einem Alter betrachteter Daten DAT-2, DAT-3 - symbolisieren.

Bei weiteren beispielhaften Ausführungsformen weist eine mögliche Kennlinie (nicht gezeigt) für die Sollintervallgröße vergleichsweise kleine Werte auf für vergleichsweise junge Daten und vergleichsweise alte Daten, und vergleichsweise große Werte für Daten mit einem Alter zwischen den jungen Daten und den alten Daten, zumindest in etwa entsprechend z.B. einer inversen "Badewannenkurve".

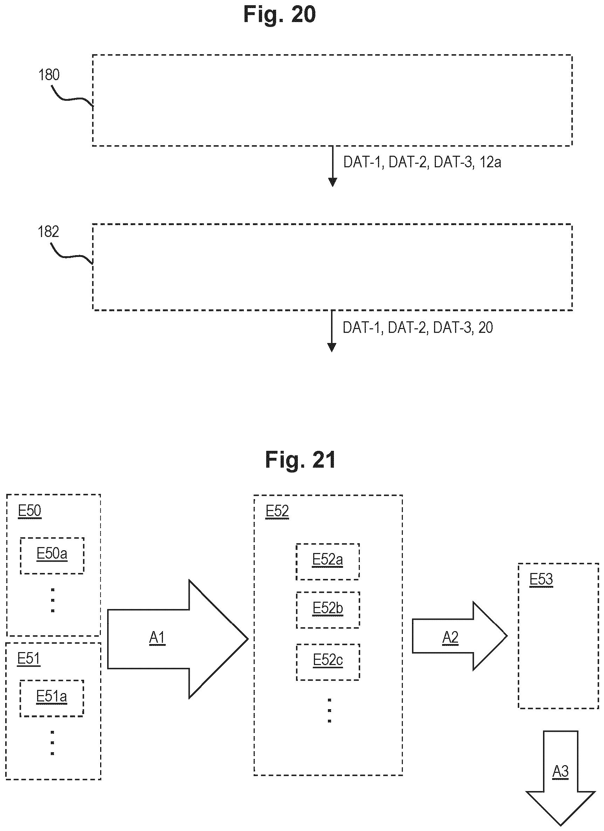

Bei weiteren beispielhaften Ausführungsformen, Fig. 20, ist vorgesehen, dass das Verfahren wenigstens eines der folgenden Elemente aufweist: a) Speichern 180, beispielsweise zumindest zeitweises Speichern, wenigstens eines Teils der ersten Daten DAT-1 und/oder der zweiten Daten DAT-2 und/oder der dritten Daten DAT-3 in einem flüchtigen Speicher 12a (Fig. 2) (der beispielsweise in dem Erzeugnis 10 integriert sein kann), b) Senden 182 wenigstens eines Teils der ersten Daten DAT-1 und/oder der zweiten Daten DAT-2 und/oder der dritten Daten DAT-3 an wenigstens eine weitere, beispielsweise externe, Einheit 20, beispielsweise ein mobiles oder stationäres Gerät zur Datenerfassung. Bei weiteren beispielhaften Ausführungsformen kann das Senden 182 unter Verwendung einer drahtlosen Datenverbindung und/oder einer drahtgebundenen Datenverbindung ausgeführt werden.

Fig. 21 zeigt schematisch ein vereinfachtes Blockdiagramm gemäß beispielhaften Ausführungsformen. Element E50 symbolisiert eine Vielzahl von Datenquellen, beispielsweise einen Sensorcluster mit Sensoren zur Erfassung von Beschleunigung und/oder Temperatur und/oder Feuchte und/der Druck und/oder weiteren Parametern, wobei aus Gründen der Übersichtlichkeit nur ein Sensor E50a abgebildet ist. Bei weiteren beispielhaften Ausführungsformen kann der Sensorcluster E50 einige zehn bis einige hundert oder mehr Sensoren aufweisen. Die von den Sensoren des Sensorclusters E50 bereitgestellten Sensordaten können bei weiteren beispielhaften Ausführungsformen z.B. als erste Daten DAT-1 ermittelt werden, und basierend auf diesen ersten Daten DAT-1 können z.B. dem Prinzip gemäß den Ausführungsformen folgend zweite Daten DAT-2 gebildet werden, usw..

Element E51 symbolisiert weitere Datenquellen E51 a, ..., bei denen es sich z.B. nicht um Sensoren handelt, die z.B. wenigstens einen physikalischen Parameter in entsprechende Sensordatenwerte transformieren. Vielmehr können die weiteren Datenquellen E51a, ... z.B. Betriebsgrößen, z.B. interne Größen (z.B. Sollwerte eines Reglers, Spannungswerte, Positionsinformationen von Antrieben, Werte von Variablen wenigstens eines mit dem Erzeugnis 10 assoziierten Computerprogramms) einer Vorrichtung 200, 200' liefern, deren Speicherung beispielsweise zur Dokumentation eines ordnungsgemäßen Prinzips des Erzeugnisses 10 bzw. der Vorrichtung 200, 200' und/oder für das Auffinden von Fehlern usw. nützlich sein kann. Auch die von den weiteren Datenquellen E51 bereitgestellten Daten können bei weiteren beispielhaften Ausführungsformen z.B. als erste Daten DAT-1 ermittelt werden, und basierend auf diesen ersten Daten DAT-1 können z.B. dem Prinzip gemäß den Ausführungsformen folgend zweite Daten DAT-2 gebildet werden, usw..

Durch die mögliche Vielzahl von Datenquellen E50, E51 können bei weiteren beispielhaften Ausführungsformen vergleichsweise hohe Datenmengen je Zeit, also z.B. Datenraten, auftreten, s. den Blockpfeil A1, wobei z.B. eine Zusammenfassung von aus diesen Daten ermittelten zweiten Daten DAT-2 gemäß beispielhaften Ausführungsformen ausführbar ist, z.B. um eine effiziente Speicherung A2, z.B. in Form von Berichten, in einem Speicher E53 zu ermöglichen, und/oder ein Senden A3 wenigstens eines Teils der zweiten Daten bzw. der zusammengefassten zweiten Daten, z.B. an wenigstens eine weitere Einheit 20 (Fig. 2).

Der Block E52 symbolisiert Aspekte einer Datenverarbeitung gemäß weiteren beispielhaften Ausführungsformen, wobei Block E52a beispielsweise das Ermitteln erster Daten DAT-1 der Datenquellen E50, E51 und/oder zweiter Daten DAT-2 basierend auf den ersten Daten DAT-1 der Datenquellen E50, E51 symbolisiert. Der Block E52b symbolisiert eine Ermittlung von Ereignissen gemäß weiteren beispielhaften Ausführungsformen, die z.B. durch dritte Daten DAT-3 charakterisiert werden. Der Block E52c symbolisiert ein optionales Zusammenfassen 130, 145 der zweiten Daten DAT-2 und/oder der dritten Daten DAT-3, beispielsweise unter Verwendung des Prinzips gemäß den Ausführungsformen. Durch das Zusammenfassen 130, 145 kann bei weiteren beispielhaften Ausführungsformen z.B. eine vergleichsweise kleine Datenrate bzw. Datenmenge für das Speichern A2 und/oder das Senden A3 der zusammengefassten Daten erzielt werden, z.B. verglichen mit der Datenrate der Daten, z.B. Rohdaten, A1 der Datenquellen E50, E51, während wesentliche Informationen wie z.B. die jeweiligen statistischen Parameter bzw. Informationen über eine Häufigkeit von aufgetretenen Ereignissen erhalten bleiben.

Weitere beispielhafte Ausführungsformen, Fig. 23, beziehen sich auf eine Vorrichtung 200 zur Ausführung des Verfahrens gemäß den Ausführungsformen. Beispielsweise kann die Vorrichtung 200 bei weiteren beispielhaften Ausführungsformen in das Erzeugnis 10 integriert, z.B. in ein Gehäuse des Erzeugnisses integriert (s. z.B. den Block 200' gemäß Fig. 2), oder an das Erzeugnis 10 angebaut sein.

Bei weiteren beispielhaften Ausführungsformen, Fig. 23, weist die Vorrichtung 200 auf: eine wenigstens einen Rechenkern 202a aufweisende Recheneinrichtung ("Computer") 202, eine der Recheneinrichtung 202 zugeordnete Speichereinrichtung 204 zur zumindest zeitweisen Speicherung wenigstens eines der folgenden Elemente: a) Daten DAT, b) Computerprogramm PRG, beispielsweise zur Ausführung des Verfahrens gemäß den Ausführungsformen.

Bei weiteren beispielhaften Ausführungsformen, Fig. 23, kann die Speichereinrichtung 204 z.B. zur Realisierung bzw. Implementierung wenigstens eines Speichers 12, 12a (Fig. 2) des Erzeugnisses 10 verwendet werden. Mit anderen Worten ist bei beispielhaften Ausführungsformen die Speichereinrichtung 204 der Vorrichtung 200 verwendbar, um den Speicher 12 und/oder den Speicher 12a bereitzustellen.

Bei weiteren beispielhaften Ausführungsformen, Fig. 23, weisen die Daten DAT somit z.B. zumindest zeitweise wenigstens eines der folgenden Elemente auf: a) die ersten Daten DAT-1, b) die zweiten Daten DAT-2, c) die dritten Daten DAT-3, d) bzw. basierend auf wenigstens manchen dieser Daten ermittelte zusammengefasste Daten.

Bei weiteren beispielhaften Ausführungsformen, Fig. 23, weist die Speichereinrichtung 204 einen flüchtigen Speicher (z.B. Arbeitsspeicher (RAM)) 204a auf, und/oder einen nichtflüchtigen (NVM-) Speicher (z.B. Flash-EEPROM) 204b, oder eine Kombination hieraus oder mit anderen, nicht explizit genannten Speichertypen. Obwohl vorliegend beispielhaft die Daten DAT als in dem flüchtigen Speicher 204a angeordnet und das Computerprogramm PRG als in dem nichtflüchtigen Speicher 204b angeordnet abgebildet sind, versteht es sich, dass bei weiteren beispielhaften Ausführungsformen a) die Daten DAT wenigstens teilweise, z.B. auch, in dem nichtflüchtigen Speicher 204b gespeichert sein können, und/oder b) das Computerprogramm PRG wenigstens teilweise, z.B. auch, in dem flüchtigen Speicher 204a, gespeichert sein kann, z.B. zumindest zeitweise.

Weitere beispielhafte Ausführungsformen, Fig. 23, beziehen sich auf ein computerlesbares Speichermedium SM, umfassend Befehle PRG', die bei der Ausführung durch einen Computer 202 diesen veranlassen, das Verfahren gemäß den Ausführungsformen auszuführen.

Weitere beispielhafte Ausführungsformen beziehen sich auf ein Computerprogramm PRG, PRG', umfassend Befehle, die bei der Ausführung des Programms PRG, PRG' durch einen Computer 202 diesen veranlassen, das Verfahren gemäß den Ausführungsformen auszuführen.

Weitere beispielhafte Ausführungsformen beziehen sich auf ein Datenträgersignal DCS, das das Computerprogramm PRG, PRG' gemäß den Ausführungsformen charakterisiert und/oder überträgt. Das Datenträgersignal DCS ist beispielsweise über eine optionale Datenschnittstelle 206 der Vorrichtung 200 empfangbar. Ebenfalls sind z.B. die Daten DAT bzw. wenigstens manche der Daten DAT-1, DAT-2, DAT-3 über die optionale Datenschnittstelle 206 übertragbar (sendbar und/oder empfangbar). Bei weiteren beispielhaften Ausführungsformen kann auch die Kommunikation bzw. Datenkommunikation mit der weiteren Einheit 20 (Fig. 2) über die optionale Datenschnittstelle 206 erfolgen.

Weitere beispielhafte Ausführungsformen, Fig. 2, beziehen sich auf ein Erzeugnis 10, beispielsweise ein Ventil oder Ventilblock, aufweisend wenigstens eine Vorrichtung 200, 200' gemäß den Ausführungsformen.

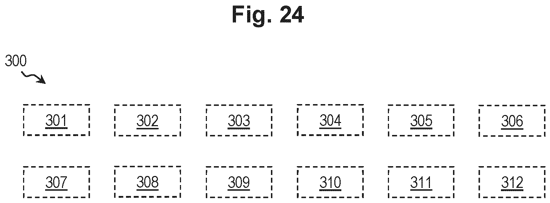

Weitere beispielhafte Ausführungsformen, Fig. 24, beziehen sich auf eine Verwendung 300 des Verfahrens gemäß den Ausführungsformen und/oder der Vorrichtung 200, 200' gemäß den Ausführungsformen und/oder des Erzeugnisses 10 gemäß den Ausführungsformen und/oder des computerlesbaren Speichermediums SM gemäß den Ausführungsformen und/oder des Computerprogramms PRG, PRG' gemäß den Ausführungsformen und/oder des Datenträgersignals DCS gemäß den Ausführungsformen für wenigstens eines der folgenden Elemente: a) Verarbeiten 301 von Daten DAT-1, DAT-2, DAT-3 eines im Feld befindlichen Erzeugnisses 10, z.B. eines in einer Anlage zur Verarbeitung von Fluiden eingebauten Ventils bzw. Ventilblocks, b) zumindest zeitweises lokales Speichern 302 von Daten, beispielsweise statistische Parameter SP charakterisierenden Daten DAT-2, in dem Erzeugnis 10, c) Komprimieren 303 von Daten, d) Reduzieren 304 von Daten, e) Steigern 305 einer Effizienz bezüglich eines, beispielsweise längerfristigen, Aufbewahrens von Daten, beispielsweise der zweiten Daten DAT-2 bzw. von den zweiten Daten DAT-2 abgeleiteten Daten (z.B. zusammengefasste zweite Daten), f) Erstellen 306 von Berichten BER-1, BER-2, bezüglich wenigstens der zweiten Daten DAT-2, g) Anpassen 307, beispielsweise dynamisches Anpassen, von eine Speicherung wenigstens der zweiten Daten DAT-2 beeinflussenden Größen, h) Vorgeben 308 unterschiedlicher zeitlicher Granularitäten für das Speichern und/oder zusammenfassen von Daten, beispielsweise der zweiten Daten DAT-2 und/oder der dritten Daten DAT-3, i) Unterscheiden 309 zwischen, beispielsweise momentan, nicht zusammenzufassenden bzw. nicht zu löschenden Daten und solchen Daten, die, beispielsweise momentan, zusammengefasst und/oder gelöscht werden können, j) Bereitstellen 310 von freiem Speicherplatz, beispielsweise in dem, beispielsweise internen, beispielsweise nichtflüchtigen, Speicher 12 des Erzeugnisses 10, k) Zusammenfassen 311 von Daten zu einer vorgebbaren Größe, l) konditionales Behalten 312 von Daten.

Bei weiteren beispielhaften Ausführungsformen ist das Prinzip gemäß den Ausführungsformen z.B. für ein gezieltes Reduzieren einer Datenmenge z.B. von bestehenden, also z.B. in dem Speicher 12 (Fig. 2) gespeicherten, zweiten Daten DAT-2 verwendbar. Z.B. kann ein Benutzer (nicht gezeigt) über das mobile Gerät 20 zur Datenerfassung, s. Fig. 2, eine Übertragung von in dem Erzeugnis 10 bzw. seinem Speicher 12, 12a gespeicherten Daten zu dem mobilen Gerät 20 anfordern, beispielsweise über eine drahtlose Datenverbindung DV mit vergleichsweise niedriger Bandbreite, z.B. eine Bluetooth-Datenverbindung. Um in vergleichsweise kurzer Zeit interessierende Informationen über einen seitherigen Betrieb des Erzeugnisses 10 bzw. seiner Komponenten zu erhalten, kann bei weiteren beispielhaften Ausführungsformen ein Zusammenfassen der in dem Erzeugnis 10 bzw. seinem Speicher 12, 12a gespeicherten Daten z.B. so ausgeführt werden, dass z.B. mit einem vorgebbaren Zeitbereich assoziierte gespeicherte Daten auf eine für die Übertragung an das mobile Gerät 20 geeignete maximale Datenmenge reduziert werden, z.B. unter Verwendung des Zusammenfassens 130, 145 gemäß beispielhaften Ausführungsformen, beispielsweise auch eines ggf. wiederholten Zusammenfassens. Beispielsweise können die für die Übertragung an das mobile Gerät 20 zusammengefassten Daten zeitweise in dem flüchtigen Speicher 12 bzw. 204a gespeichert werden, und danach z.B. wieder verworfen werden.

Bei weiteren beispielhaften Ausführungsformen kann das Verfahren gemäß den Ausführungsformen somit beispielsweise wenigstens einen der folgenden Aspekte aufweisen: a) Empfangen einer Anforderung zur Übertragung von Daten, beispielsweise von in dem Erzeugnis gespeicherten zweiten Daten DAT-2 (und/oder dritter Daten DAT-3) bzw. daraus ableitbarer Daten, wobei beispielsweise die Anforderung über eine drahtlose Datenverbindung DV empfangbar ist, beispielsweise über die optionale Datenschnittstelle 206 der Vorrichtung 200, wobei beispielsweise die Anforderung einen Vorgabewert charakterisierend eine maximale Datenmenge (z.B. "100 Kilobytes") für die Übertragung der angeforderten Daten aufweist, wobei beispielsweise die Anforderung einen Zeitbereich charakterisiert, für den die Daten übertragen werden sollen, wobei beispielsweise die Anforderung einen Parameter aufweist, der angibt, welche Form des Zusammenfassens 130, 145 (z.B. Zusammenfassen von zweiten Daten DAT-2 und von dritten Daten DAT-3, oder Zusammenfassen von zweiten Daten DAT-2, nicht aber von dritten Daten DAT-3 oder Zusammenfassen von dritten Daten DAT-3, nicht aber von zweiten Daten DAT-2) ausgeführt werden soll, wobei beispielsweise die Anforderung einen Parameter aufweist, der angibt, welche minimale zeitliche Auflösung für zusammengefasste Daten gefordert wird, b) Ermitteln der zu übertragenden Daten, c) optional, Zusammenfassen von Daten für die Übertragung, beispielsweise gemäß wenigstens einer Information der Anforderung, d) Senden der ggf. zusammengefassten Daten.

Bei weiteren beispielhaften Ausführungsformen ist das Prinzip gemäß den Ausführungsformen skalierbar, sowohl z.B. was eine Anzahl der Datenquellen DQ-1, DQ-2, ... als auch eine Anzahl von statistischen Parametern betrifft.

## Patentansprüche

1. Verfahren, beispielsweise computerimplementiertes Verfahren, zum Verarbeiten von mit einem Erzeugnis (10) assoziierten Daten, aufweisend: Ermitteln (100) von ersten Daten (DAT-1) wenigstens einer mit dem Erzeugnis (10) assoziierten Datenquelle (DQ-1), Ermitteln (102), basierend auf den ersten Daten (DAT-1), zweiter Daten (DAT-2), die wenigstens einen statistischen Parameter (SP) der ersten Daten (DAT-1) charakterisieren, beispielsweise repräsentieren, Prüfen (104), ob das Ermitteln (100) der ersten Daten (DAT-1) und/oder das Ermitteln (102) der zweiten Daten (DAT-2) für ein vorgebbares erstes Zeitintervall (T-INT-1) ausgeführt worden ist, und, wenn das Prüfen (104) ergibt, dass das Ermitteln (100) der ersten Daten (DAT-1) und/oder das Ermitteln (102) der zweiten Daten (DAT-2) für das vorgebbare erste Zeitintervall (T-INT-1) ausgeführt worden ist, Speichern (106) wenigstens der zweiten Daten (DAT-2), wobei beispielsweise die wenigstens eine mit dem Erzeugnis (10) assoziierte Datenquelle (DQ-1) ein Sensor ist, beispielsweise ein dem Erzeugnis (10) zugeordneter, beispielsweise in das Erzeugnis (10) integrierter, Sensor.

2. Verfahren nach Anspruch 1, wobei, wenn das Prüfen (104) ergibt, dass das Ermitteln (100) der ersten Daten (DAT-1) und/oder das Ermitteln (102) der zweiten Daten (DAT-2) nicht für das vorgebbare erste Zeitintervall (T-INT-1) ausgeführt worden ist, das Verfahren aufweist: Fortführen (108) des Ermittelns (100) der ersten Daten (DAT-1) und/oder des Ermittelns (102) der zweiten Daten (DAT-2).

3. Verfahren nach wenigstens einem der vorstehenden Ansprüche, wobei das Speichern (106) wenigstens der zweiten Daten (DAT-2) ein Speichern (106a) wenigstens der zweiten Daten (DAT-2) in einem, beispielsweise internen, beispielsweise nichtflüchtigen, Speicher (12) des Erzeugnisses (10) aufweist, und, optional, ein Speichern (106b) von mit den zweiten Daten (DAT-2) assoziierten Zeitinformationen (TIM-INF-DAT-2), wobei beispielsweise die mit den zweiten Daten (DAT-2) assoziierten Zeitinformationen (TIM-INF-DAT-2) einen mit den zweiten Daten (DAT-2) assoziierten Zeitbereich charakterisieren.

4. Verfahren nach wenigstens einem der vorstehenden Ansprüche, aufweisend wenigstens eines der folgenden Elemente: a) Initialisieren (110) wenigstens eines der folgenden Elemente: a1) erster Zähler, beispielsweise mit dem vorgebbaren ersten Zeitintervall (T-INT-1) assoziierter Zähler (sc_tim), a2) aktueller Minimalwert (sc_min), a3) aktueller Maximalwert (sc_max), a4) eine aktuelle erste mit einem bzw. dem Mittelwert assoziierte Größe (sc_avg), b) Erfassen (111) eines aktuellen, mit den ersten Daten (DAT-1) assoziierten Werts (val), c) Ausführen (112) einer Filterung, beispielsweise Entprellung, d) Aktualisieren (113) des ersten Zählers (sc_tim) und/oder der aktuellen ersten Größe (sc_avg), e) Prüfen (114), ob der aktuelle Wert (val), beispielsweise ein mittels der Filterung (112) erhaltener gefilterter Wert (val'), kleiner als der aktuelle Minimalwert (sc_min) ist, und, falls ja, Aktualisieren (114a) des aktuellen Minimalwerts (sc_min), f) Prüfen (115), ob der aktuelle Wert (val), beispielsweise ein mittels der Filterung (112) erhaltener gefilterter Wert (val'), größer als der aktuelle Maximalwert (sc_max) ist, und, falls ja, Aktualisieren (114a) des aktuellen Maximalwerts (sc_max).

5. Verfahren nach wenigstens einem der vorstehenden Ansprüche, aufweisend: Ermitteln (120a) der zweiten Daten (DAT-2) für das vorgebbare erste Zeitintervall (T-INT-1) und Speichern (120b) der zweiten Daten (DAT-2) für das vorgebbare erste Zeitintervall (T-INT-1) zusammen mit das erste Zeitintervall (T-INT-1), beispielsweise einen Anfang und ein Ende des ersten Zeitintervalls (T-INT-1), charakterisierenden Zeitinformation (INF-T-INT-1), beispielsweise in Form eines ersten Berichts (BER-1), Ermitteln (122a) der zweiten Daten (DAT-2) für ein vorgebbares zweites Zeitintervall (T-INT-2) und Speichern (122b) der zweiten Daten (DAT-2) für das vorgebbare zweite Zeitintervall (T-INT-2) zusammen mit das zweite Zeitintervall (T-INT-2), beispielsweise einen Anfang und ein Ende des zweiten Zeitintervalls (T-INT-2), charakterisierenden Zeitinformation (INF-T-INT-2), beispielsweise in Form eines zweiten Berichts (BER-1).

6. Verfahren nach wenigstens einem der vorstehenden Ansprüche, aufweisend: Zusammenfassen (130) zweiter Daten (E30, E31; E34, E32) unterschiedlicher, beispielsweise zueinander benachbarter, Zeitbereiche (T12, T23; T13, T34), wobei beispielsweise zusammengefasste zweite Daten (E34; E35) erhalten werden, und, optional, Speichern (132) der zusammengefassten zweiten Daten (E34; E35), wobei beispielsweise das Zusammenfassen (130) wenigstens eines der folgenden Elemente aufweist: a) Ermitteln (130a) eines Minimums für die zusammengefassten zweiten Daten (E34; E35) als Minimum der unterschiedlichen Zeitbereiche (T12, T23; T13, T34), b) Ermitteln (130b) eines Maximums für die zusammengefassten zweiten Daten (E34; E35) als Maximum der unterschiedlichen Zeitbereiche (T12, T23; T13, T34), c) Ermitteln (130c) eines Mittelwerts für die zusammengefassten zweiten Daten (E34; E35) als gewichteter Mittelwert der jeweiligen Mittelwerte der unterschiedlichen Zeitbereiche (T12, T23; T13, T34), wobei beispielsweise als Gewichtungsfaktoren eine jeweilige Größe bzw. Dauer des jeweiligen Zeitbereichs (T12, T23; T13, T34) verwendbar ist.

7. Verfahren nach wenigstens einem der vorstehenden Ansprüche, aufweisend: Speichern (140) dritter Daten (DAT-3), die wenigstens ein mit dem Erzeugnis (10) assoziiertes Ereignis charakterisieren, und, optional, Bereitstellen (141) und/oder Verwenden (142) einer zweiten Datenstruktur (DS-2) für das Speichern (140) der dritten Daten (DAT-3), wobei die zweite Datenstruktur (DS-2) wenigstens aufweist: ein Informationselement (E40a) für einen Zeitpunkt eines Auftretens des Ereignisses, ein Informationselement (E41) für eine das Ereignis charakterisierende Information, wobei beispielsweise das Verfahren aufweist: Zusammenfassen (145) dritter Daten (E45, E46) unterschiedlicher, beispielsweise zueinander benachbarter, Zeitpunkte oder Zeitbereiche (T12, T23), wobei beispielsweise zusammengefasste dritte Daten (E47) erhalten werden, und, optional, Speichern (147) der zusammengefassten dritten Daten (E47), wobei beispielsweise das Zusammenfassen (145) dritter Daten (E45, E46) unterschiedlicher,
beispielsweise zueinander benachbarter, Zeitpunkte und/oder Zeitbereiche (T12, T23) aufweist: Zuordnen (145a) der dritten Daten (E45, E46) der unterschiedlichen Zeitpunkte oder Zeitbereiche (T12, T23) zu einem aggregierten Zeitbereich, wobei beispielsweise der aggregierte Zeitbereich die unterschiedlichen Zeitpunkte und/oder Zeitbereiche (T12, T23) aufweist, und, optional, Aggregieren (145b) einer jeweiligen ein Ereignis charakterisierenden Information.

8. Verfahren nach wenigstens einem der vorstehenden Ansprüche, aufweisend: Ermitteln (150) einer ersten Größe (G1), die eine Datenmenge von in dem Speicher (12) gespeicherten zweiten Daten (DAT-2) und/oder dritten Daten (DAT-3) charakterisiert, optional Vergleichen (152) der ersten Größe (G1) mit einem vorgebbaren ersten Schwellwert (SW1), optional basierend auf dem Vergleichen (152), Zusammenfassen (154; 130; 145) wenigstens eines der folgenden Elemente: a) in dem Speicher (12) gespeicherter zweiter Daten (DAT-2), b) in dem Speicher (12) gespeicherter dritter Daten (DAT-3), wobei beispielsweise das Zusammenfassen (154; 130; 145), beispielsweise ausschließlich, für zweite und/oder dritte Daten (DAT-2, DAT-3) ausgeführt (154a) wird, die älter sind als ein vorgebbarer zweiter Schwellwert (SW2), wobei beispielsweise das Verfahren aufweist: Unterlassen (154b) eines Zusammenfassens von in dem Speicher (12) gespeicherten zweiten und/oder dritten Daten (DAT-2, DAT-3), die jünger sind als der zweite Schwellwert (SW2).

9. Verfahren nach wenigstens einem der vorstehenden Ansprüche, aufweisend: Ermitteln (155), beispielsweise Vorgeben (155a) oder Empfangen (155b), eines bzw. des zweiten Schwellwerts (SW2), wobei der zweite Schwellwert (SW2) einen Zeitpunkt derart charakterisiert, dass in dem Speicher (12) gespeicherte zweite und/oder dritte Daten (DAT-2, DAT-3), die jünger sind als der zweite Schwellwert (SW2), nicht zusammengefasst und/oder gelöscht werden dürfen, und, optional, Ermitteln (157), basierend auf dem zweiten Schwellwert (SW2), ob in dem Speicher (12) gespeicherte zweite Daten (DAT-2) und/oder dritte Daten (DAT-3) zusammengefasst werden dürfen, wobei beispielsweise das Verfahren aufweist: Ermitteln (160) einer zweiten Größe (G2), die eine Datenmenge von in dem Speicher (12) gespeicherten zweiten Daten (DAT-2) und/oder dritten Daten (DAT-3) charakterisiert, die jünger sind als der zweite Schwellwert (SW2), und, optional Verwenden (162) der zweiten Größe (G2), beispielsweise für eine Steuerung eines Betriebs wenigstens einer Komponente des Erzeugnisses (10), wobei beispielsweise das Verfahren aufweist: Vergleichen (165) der zweiten Größe (G2) mit der ersten Größe (G1), und, basierend auf dem Vergleichen (165), Ausführen (167) wenigstens eines der folgenden Elemente: a) Verändern (167a) des zweiten Schwellwerts (SW2), und/oder b) Verändern (167b) des vorgebbaren ersten Zeitintervalls (T-INT-1), c) Bereitstellen (167c) und/oder Verändern (167d) eines ersten Parameters (P1) für das Zusammenfassen (154; 130; 145), wobei beispielsweise das Vergleichen (165) aufweist: Ermitteln (165a) eines Quotienten (Q-G2-G1) aus der zweiten Größe (G2) und der ersten Größe (G1) und Vergleichen (165b), ob der Quotient (Q-G2-G1) größer ist als ein vorgebbarer dritter Schwellwert (SW3).

10. Verfahren nach wenigstens einem der Ansprüche 6 bis 9, aufweisend: Bereitstellen (170) von ersten Informationen (I-1) zur Steuerung des Zusammenfassens (130; 145), wobei die ersten Informationen (I-1) beispielsweise eine Sollintervallgröße in Abhängigkeit wenigstens einer Betriebsdauer des Erzeugnisses (10) beschreiben, wobei beispielsweise die ersten Informationen (I-1) mittels einer Kennlinie (K1; K2; K3) charakterisierbar sind, und, optional Verwenden (172) der ersten Informationen (I-1) für das Zusammenfassen (130; 145).

11. Verfahren nach wenigstens einem der vorstehenden Ansprüche, aufweisend wenigstens eines der folgenden Elemente: a) Speichern (180), beispielsweise zumindest zeitweises Speichern (180a), wenigstens eines Teils der ersten Daten (DAT-1) und/oder der zweiten Daten (DAT-2) und/oder der dritten Daten (DAT-3) in einem flüchtigen Speicher (12a), b) Senden (182) wenigstens eines Teils der ersten Daten (DAT-1) und/oder der zweiten Daten (DAT-2) und/oder der dritten Daten (DAT-3) an wenigstens eine weitere, beispielsweise externe, Einheit (20).

12. Vorrichtung (200; 200') zur Ausführung des Verfahrens nach wenigstens einem der vorstehenden Ansprüche, wobei beispielsweise die Vorrichtung (200; 200') dazu ausgebildet ist, das Verfahren nach wenigstens einem der vorstehenden Ansprüche auszuführen.

13. Erzeugnis, beispielsweise Erzeugnis zur Beeinflussung einer Fluidströmung, beispielsweise Ventil oder Ventilblock, (10), aufweisend wenigstens eine Vorrichtung (200; 200') nach Anspruch 12.

14. Computerlesbares Speichermedium (SM), aufweisend Befehle (PRG'), die bei der Ausführung durch einen Computer (202) diesen veranlassen, das Verfahren nach wenigstens einem der Ansprüche 1 bis 11 auszuführen.

15. Computerprogramm (PRG; PRG'), umfassend Befehle, die bei der Ausführung des Programms (PRG; PRG') durch einen Computer (202) diesen veranlassen, das Verfahren nach wenigstens einem der Ansprüche 1 bis 11 auszuführen.

16. Verwendung (300) des Verfahrens nach wenigstens einem der Ansprüche 1 bis 11 und/oder der Vorrichtung (200; 200') nach Anspruch 12 und/oder des Erzeugnisses (10) nach Anspruch 13 und/oder des computerlesbaren Speichermediums (SM) nach Anspruch 14 und/oder des Computerprogramms (PRG; PRG') nach Anspruch 15 und/oder eines Datenträgersignals (DCS), das das Computerprogramm (PRG; PRG') nach Anspruch 15 charakterisiert und/oder überträgt für wenigstens eines der folgenden Elemente: a) Verarbeiten (301) von Daten eines im Feld befindlichen Erzeugnisses (10), b) zumindest zeitweises lokales Speichern (302) von Daten, beispielsweise statistische Parameter charakterisierenden Daten, in dem Erzeugnis (10), c) Komprimieren (303) von Daten, d) Reduzieren (304) von Daten, e) Steigern (305) einer Effizienz bezüglich eines, beispielsweise längerfristigen, Aufbewahrens von Daten, beispielsweise der zweiten Daten (DAT-2) bzw. von den zweiten Daten (DAT-2) abgeleiteten Daten, f) Erstellen (306) von Berichten bezüglich wenigstens der zweiten Daten (DAT-2), g) Anpassen (307), beispielsweise dynamisches Anpassen, von eine Speicherung wenigstens der zweiten Daten (DAT-2) beeinflussenden Größen, h) Vorgeben (308) unterschiedlicher zeitlicher Granularitäten für das Speichern und/oder zusammenfassen von Daten, beispielsweise der zweiten (DAT-2) und/oder der dritten Daten (DAT-3), i) Unterscheiden (309) zwischen, beispielsweise momentan, nicht zusammenzufassenden bzw. nicht zu löschenden Daten und solchen Daten, die, beispielsweise momentan, zusammengefasst und/oder gelöscht werden können, j) Bereitstellen (310) von freiem Speicherplatz, beispielsweise in dem, beispielsweise internen, beispielsweise nichtflüchtigen, Speicher (12) des Erzeugnisses (10), k) Zusammenfassen (311) von Daten zu einer vorgebbaren Größe, l) konditionales Behalten (312) von Daten.
